(19) Europäisches Patentamt / European Patent Office / Office européen des brevets

(11) **EP 3 914 976 B1**

(12) **EUROPÄISCHE PATENTSCHRIFT**

(45) Veröffentlichungstag und Bekanntmachung des Hinweises auf die Patenterteilung:
**12.10.2022 Patentblatt 2022/41**

(21) Anmeldenummer: **19710332.8**

(22) Anmeldetag: **01.03.2019**

(51) Internationale Patentklassifikation (IPC):
**G05B 19/4093** (2006.01)   **G05B 19/418** (2006.01)
**B23Q 3/155** (2006.01)   **B23Q 3/16** (2006.01)

(52) Gemeinsame Patentklassifikation (CPC):
**G05B 19/40938; B23Q 3/15503; G05B 19/4187;**
G05B 2219/33124; Y02P 90/02

(86) Internationale Anmeldenummer:
**PCT/EP2019/055121**

(87) Internationale Veröffentlichungsnummer:
**WO 2020/177836 (10.09.2020 Gazette 2020/37)**

(54) **ZUORDNEN VON WERKZEUGEN ZU PLÄTZEN IN EINEM WERKZEUGMAGAZIN**

ASSIGNING TOOLS TO SPACES IN A TOOL MAGAZINE

AFFECTATION D'OUTILS À DES EMPLACEMENTS DANS UN MAGASIN D'OUTILS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.12.2021 Patentblatt 2021/48**

(73) Patentinhaber: **Siemens Aktiengesellschaft 80333 München (DE)**

(72) Erfinder:
• **BAIER, Georg 81241 München (DE)**
• **HUPP, Lena 81371 München (DE)**
• **ROYER, Christian 85521 Ottobrunn (DE)**
• **BECHER, Silvio 81827 München (DE)**

(56) Entgegenhaltungen:
**EP-A1- 1 870 200   WO-A2-2018/195572**

**Beschreibung**

Die Erfindung betrifft eine Werkzeugmaschine mit einem Werkzeugmagazin, das einen Beschicker umfasst. Insbesondere betrifft die Erfindung das Zuordnen von Werkzeugen zu Plätzen des Werkzeugmagazins derart, dass die Werkzeugmaschine beim Abarbeiten einer Sequenz vorbestimmter Arbeitsschritte nicht auf den Beschicker warten muss.

Eine Werkzeugmaschine ist dazu eingerichtet, eine vorbestimmte Sequenz von Arbeitsschritten auszuführen, wobei jedem Arbeitsschritt ein Werkzeug und eine Bearbeitungszeit zugeordnet sind. Ein Werkzeugmagazin umfasst eine Anzahl Plätze zur Bereithaltung einer Anzahl Werkzeuge für die Werkzeugmaschine. Ein Beschicker des Werkzeugmagazins ist zur Beförderung von Werkzeugen zwischen Plätzen des Werkzeugmagazins und einem Übergabepunkt zur Werkzeugmaschine eingerichtet. Die Plätze sind unterschiedlich weit vom Übergabepunkt entfernt, sodass unterschiedliche Plätze unterschiedliche Bewegungszeiten eines zugeordneten Werkzeugs bedingen.

Während die Werkzeugmaschine in einem Arbeitsschritt ein zugeordnetes Werkzeug verwendet, kann der Beschicker ein Werkzeug des vorangehenden Arbeitsschritts vom Übergabepunkt zu einem zugeordneten Platz bringen, sich zum Platz eines Werkzeugs des nachfolgenden Arbeitsschritts bewegen und das zugeordnete Werkzeug am Übergabepunkt bereitstellen.

Um eine Zuordnung von Werkzeugen zu Plätzen zu bestimmen ist ein Verfahren vorgeschlagen worden, das eine Optimierung mittels Mixed Integer Programming durchführt. Praktisch auftretende Problemgrößen können damit aber nicht in akzeptabler Zeit bearbeitet werden.

Aus WO 2018/195572 A2 ist eine Bearbeitungsanlage und Verfahren zum Durchführen eines Werkzeugwechsels an der Bearbeitungsanlage bekannt.

Aus EP 1 870 200 A1 ist ein Verfahren und eine Vorrichtung zum Bearbeiten eines Werkstücks, insbesondere zum spanabhebenden Bearbeiten eines metallischen Werkstücks bekannt.

Eine der vorliegenden Erfindung zu Grunde liegende Aufgabe besteht in der Angabe einer verbesserten Technik zur Zuordnung von Werkzeugen zu Plätzen eines Werkzeugmagazins. Die vorliegende Erfindung löst dieses Problem mittels der Gegenstände der unabhängigen Ansprüche. Unteransprüche geben bevorzugte Ausführungsformen wieder.

Eine Werkzeugmaschine ist dazu eingerichtet, eine vorbestimmte Sequenz von Arbeitsschritten auszuführen, wobei jedem Arbeitsschritt ein Werkzeug und eine Bearbeitungszeit zugeordnet sind. Ein Werkzeugmagazin ist dazu eingerichtet, eine Anzahl Werkzeuge für die Werkzeugmaschine in jeweils zugeordneten Plätzen bereitzuhalten und umfasst einen Beschicker zur Beförderung von Werkzeugen von und zu einem Übergabepunkt zur Werkzeugmaschine.

In einem Verfahren zum Zuordnen von Werkzeugen zu Plätzen des Werkzeugmagazins wird aus der Sequenz von Arbeitsschritten eine Menge von Arbeitsschritten bestimmt, deren Bearbeitungszeiten jeweils kürzer sind als eine vorbestimmte Zykluszeit des Werkzeugmagazins. Aus dieser Menge wird iterativ ein Arbeitsschritt ausgesucht; ein in einem vorangehenden Arbeitsschritt und/oder ein in einem nachfolgenden Arbeitsschritt verwendetes Werkzeug werden Plätzen des Werkzeugmagazins zugeordnet; und der Arbeitsschritt wird aus der Menge entfernt. Die Werkzeuge werden jeweils derart zugeordnet, dass die Werkzeugmaschine beim Übergang von dem Arbeitsschritt zu einem folgenden Arbeitsschritt nicht oder möglichst kurz auf den Beschicker warten muss. Ein Warten kann vermieden werden, wenn die Bearbeitungszeit länger ist als eine Zeit, die der Beschicker dazu benötigt, das Werkzeug des vorangehenden Arbeitsschritts vom Übergabepunkt zum zugeordneten Platz, sich von dort zum Platz des Werkzeugs des nachfolgenden Arbeitsschritts, und anschließend dieses Werkzeug zum Übergabepunkt zu bewegen. Aufnahme- und/oder Platzierungszeiten von Werkzeugen können ebenfalls berücksichtigt werden.

Die Auswahl des Arbeitsschritts erfolgt nach Art eines Greedy-Algorithmus derart, dass die Zuordnung der Werkzeuge eines Schritts jeweils eine maximale Anzahl Fahrten des Beschickers festlegt. Anschließend wird der betrachtete Arbeitsschritt aus der Menge entfernt. Ist die Menge leer, können noch unzugeordnete Werkzeuge unzugeordneten Plätzen des Werkzeugregals zugeordnet werden.

Das Verfahren kann eine rasche und sichere Bestimmung einer Zuordnung von Werkzeugen zu Plätzen des Werkzeugmagazins ermöglichen. Durch die Iteration nach Art eines Greedy-Algorithmus kann das Verfahren rasch konvergieren. Die Zuordnung kann ohne extensives Ausprobieren möglicher Lösungen bestimmt werden, sodass das Verfahren für praktisch anzutreffende Problemgrößen sinnvoll verwendbar sein kann. Sollte keine optimale Lösung bestimmbar sein, so kann das Verfahren eine zumindest teilweise optimierte Lösung bereitstellen.

Das Verfahren kann zur praktischen Anwendung an einer industriell genutzten Werkzeugmaschine eingerichtet sein. Bevorzugt wird das Verfahren mittels eines Computers ausgeführt und kann in Form eines Computerprogrammprodukts realisiert sein. Die praktische Anwendbarkeit des Verfahrens wurde für eine Sequenz mit ca. 500 Arbeitsschritten, ca. 100 Werkzeugen und ca. 250 Plätzen im Werkzeugmagazin nachgewiesen. Ein handelsüblicher Arbeitsplatz-Computer konnte dabei eine Zuordnung von Werkzeugen 125 zu Plätzen 135 des Werkzeugmagazins 110 innerhalb weniger Sekunden bestimmen. Ähnliche Bestimmungszeiten konnten bei Verwendung von ca. 200 und ca. 60 Werkzeugen erzielt werden.

Statt Arbeitsschritten können kritische Tripel in der Menge gesammelt werden, wobei ein kritisches Tripel drei aufeinander folgende Arbeitsschritte umfasst, bei dem das Werkzeug des mittleren Arbeitsschritts weniger lang verwendet wird als eine maximale Zyklenzeit dauert. Beim Platzieren von Werkzeugen des Tripels werden nur die Werkzeuge des ersten und des dritten Arbeitsschritts jeweils einem Platz im Werkzeugmagazin zugeordnet. Die maximale Zyklenzeit bestimmt sich dabei als die Zeit, die der Beschicker benötigt, um ein Werkzeug $w_{i-1}$ eines erfolgten Arbeitsschritts $s_{i-1}$ vom Übergabepunkt zu seinem zugeordneten Platz $p_{i-1}$ zu befördern, sich von dort zum Platz $p_{i+1}$ des Werkzeugs $w_{i+1}$ eines bevorstehenden Arbeitsschritts $s_{i+1}$ zu bewegen, und das Werkzeug $w_{i+1}$ von dort zum Übergabepunkt zu befördern. Die Menge umfasst zunächst alle kritischen Tripel der Sequenz. Aus der Menge kann jeweils dasjenige Tripel ausgesucht werden, das die höchste Relevanz hat. Die Relevanz entspricht bevorzugt der Anzahl Fahrten des Beschickers, die durch das Platzieren des ersten und des dritten Werkzeugs des Tripels festgelegt werden.

Bevorzugt wird die Relevanz nur bezüglich Arbeitsschritten $s_i$ bestimmt, die von einem kritischen Tripel $r_i$ der Menge M umfasst sind. Dadurch können die kritischen Tripel $r_i$ verbessert rasch behandelt werden. Arbeitsschritte, die von den kritischen Tripeln $r_i$ unabhängig sind, können anschließend behandelt werden.

In einer weiteren Ausführungsform sind jedem Platz $p_i$ eine erste Zeit $b_{i1}$ zugeordnet, die der Beschicker für eine Beförderung eines Werkzeugs $w_i$ vom Platz $p_i$ zum Übergabepunkt benötigt, und eine zweite Zeit $b_{i2}$, die der Beschicker für eine Beförderung eines Werkzeugs $w_i$ vom Übergabepunkt zum Platz $p_i$ benötigt. Dabei können beide Zeiten beim Zuordnen berücksichtigt werden.

Dadurch können Beförderungszeiten des Beschickers verbessert modelliert werden.

Eine Beförderungszeit eines Werkzeugs zwischen dem Übergabepunkt und einem Platz ist üblicherweise - aber nicht immer - von einem euklidischen Abstand zwischen den beiden Orten abhängig. Der Beschicker kann bei einer Fahrt oder beim Zugriff auf einen Platz einer vorbestimmten Verzögerung unterworfen sein. Beispielsweise kann das Werkzeugmagazin zwei regalartige Anordnungen umfassen, die einander zugewandt sind und zwischen denen der Beschicker arbeitet. Bei einem Zugriff auf einen Platz eines der Regale kann ein bestimmter Zeitaufwand für eine Drehbewegung des Beschickers anfallen. Ferner kann beispielsweise das Ablegen eines Werkzeugs an seinem Platz zeitaufwändiger als das Ablegen am Übergabepunkt sein, etwa weil unter beengten Platzverhältnissen vorsichtiger rangiert werden muss.

Die Zeit b eines Platzes p kann auch bezüglich eines dem Platz $p_i$ zugeordneten Werkzeugs $w_i$ bestimmt werden. Dadurch kann berücksichtigt werden, dass bestimmte Werkzeuge langsamer als andere bewegt werden müssen. Der Einfluss einer Kombination aus einem Werkzeug und einem Platz auf die erforderliche Zeit kann berücksichtigt werden, sodass eine noch realistischere Modellierung möglich ist.

Die Zuordnung von Werkzeugen erfolgt bevorzugt derart, dass danach alle unzugeordneten Werkzeuge einem zulässigen Platz zugewiesen werden können. So kann sichergestellt sein, dass eine folgende Iteration des Algorithmus, also der nächste Schritt (c), durchführbar ist. Effektiv kann so sichergestellt sein, dass der Greedy-Algorithmus eine vollständige Platzierung erzielt.

Zur Sicherstellung der Platzierbarkeit aller verbleibender Werkzeuge kann ein Konstrukt erstellt werden, das Wächter, Zeuge oder Garant genannt werden kann und eine zulässige Zuordnung aller nicht zugeordneten Werkzeuge zu freien Plätzen umfasst. Der Garant stellt keinen Bestandteil der Lösung dar; er wird nur erstellt, um die Zulässigkeit einer Zuordnung zu beweisen und kann anschließend verworfen werden.

Sollte der Garant in einem Schritt (c) nicht gebildet werden können, so kann eine erfolgte Zuordnung eines Werkzeugs w zu einem Platz p nicht verwendet werden. In diesem Fall kann im Schritt (c) versucht werden, eine andere Zuordnung zu treffen. Sind alle möglichen Zuordnungen durchprobiert und konnte für keine von ihnen der Garant bestimmt werden, so kann das Verfahren erfolglos terminieren und beispielsweise die leere Menge ausgeben.

Der Garant kann auf verschiedene Weisen bestimmt werden. Bekannte Bestimmungsarten unterscheiden sich üblicherweise in ihrem Aufwand und ihrer Fähigkeit, eine Lösung zu finden, falls eine existiert. Üblicherweise sind diese Eigenschaften gegenläufig, indem eine Lösung umso sicherer gefunden werden kann, je aufwändiger das Bestimmungsverfahren ist. Es wird daher vorgeschlagen, mehrere Bestimmungsverfahren mit unterschiedlichen Aufwänden vorzusehen. Zunächst wird versucht, den Garant mittels des am wenigsten aufwändigen Bestimmungsverfahrens zu bestimmen. Nur wenn dieses scheitert, kann das nächst aufwändigere Bestimmungsverfahren eingesetzt werden. Auf diese Weise kann fortgefahren werden, bis alle Bestimmungsverfahren durchprobiert sind. Dadurch kann der Aufwand zur Bestimmung des Garanten dynamisch angepasst werden, sodass sie insgesamt ressourcensparend und rasch durchgeführt werden kann.

Eine erste bevorzugte Bestimmungsmethode, die auch Platztausch genannt wird, umfasst ein Vertauschen von im Garant zu Plätzen zugeordneten Werkzeugen. Dazu können nacheinander unzugeordnete Werkzeuge Plätzen zugeordnet werden, wobei Überschneidungen nicht berücksichtigt werden. Dann können platzierte Werkzeuge, die sich mit benachbarten Werkzeugen überschneiden (Nebenplatzbetrachtung), aus dem Garant entnommen und neu zugeordnet werden. Ist das nicht möglich, so kann der Platztausch als gescheitert angesehen werden.

Eine zweite bevorzugte Bestimmungsmethode umfasst ein Zuordnen von Werkzeugen zu Plätzen mittels einer Best-Fit-Strategie. Im Unterschied zur ersten Bestimmungsmethode können dabei nicht nur einander überschneidende Werkzeuge, sondern auch Werkzeuge aus einer vorbestimmten Nachbarschaft aus dem Garant entfernt und neu zugeordnet werden. Ist das nicht möglich, so kann auch die Best-Fit-Strategie als gescheitert angesehen werden.

Eine dritte bevorzugte Bestimmungsmethode umfasst ein Zuordnen von Werkzeugen zu Plätzen mittels eines Gemischt Ganzzahligen Programms. Dabei kann ein bekannter Solver, beispielsweise Cplex, dazu verwendet werden, die Anzahl der platzierten Werkzeuge 125 im Garanten zu maximieren. Kann auch hierbei keine Lösung gefunden werden, die alle verbleibenden Werkzeuge platziert, so kann das Gemischt Ganzzahlige Programm als gescheitert angesehen werden.

Nach einem weiteren Aspekt der Erfindung ist eine Vorrichtung zur Zuordnung von Werkzeugen w zu Plätzen p in einem Werkzeugmagazin dazu eingerichtet, ein hierin beschriebenes Verfahren ganz oder teilweise auszuführen. Die Vorrichtung kann einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Vorrichtung kann dazu eingerichtet sein, eine Beförderung von Werkzeugen, die zum Abarbeiten der Sequenz erforderlich sind, an zugeordnete Plätze zu steuern. Dazu können bereits im Werkzeugmagazin befindliche Werkzeuge entsprechend umgesetzt werden. Ferner kann ein bereitgestelltes Werkzeug neu an einem zugeordneten Platz abgelegt oder ein vorbestimmtes Werkzeug aus dem Werkzeugmagazin entfernt werden.

Die Vorrichtung weist folgende Einheiten auf:

- Eine Einheit zum Erfassen einer Sequenz von geplanten Arbeitsschritten $s_i$ der Werkzeugmaschine;
- wobei jedem Arbeitsschritt $s_i$ ein Werkzeug $w_i$ zugeordnet ist, mit dem die Werkzeugmaschine den Arbeitsschritt $s_i$ durchführt, und eine Bearbeitungszeit $t_i$, während der das Werkzeug $w_i$ durch die Werkzeugmaschine verwendet wird,

  o wobei vor dem Arbeitsschritt $s_i$ der Beschicker das Werkzeug $w_i$ von seinem zugeordneten Platz $p_i$ im Werkzeugmagazin zu einem Übergabepunkt befördert,
  o wo es von der Werkzeugmaschine aufgenommen wird,
  o wobei nach dem Arbeitsschritt $s_i$ das Werkzeug $w_i$ von der Werkzeugmaschine am Übergabepunkt abgelegt wird,
  o von wo es durch den Beschicker zu seinem zugeordneten Platz $p_i$ im Werkzeugmagazin befördert wird;

- wobei jedem Platz $p_i$ eine Zeit $b_i$ zugeordnet ist, die der Beschicker für eine Beförderung eines Werkzeugs $w_i$ vom Platz $p_i$ zum Übergabepunkt oder umgekehrt benötigt;

gekennzeichnet durch:

- eine Einheit zum Bestimmen einer maximalen Zyklenzeit, die der Beschicker benötigt, um ein Werkzeug $w_{i-1}$ eines erfolgten Arbeitsschritts $s_{i-1}$ vom Übergabepunkt zu seinem zugeordneten Platz $p_{i-1}$ zu befördern, sich von dort zum Platz $p_{i+1}$ des Werkzeugs $w_{i+1}$ eines bevorstehenden Arbeitsschritts $s_{i+1}$ zu bewegen, und das Werkzeug $w_{i+1}$ von dort zum Übergabepunkt zu befördern;
- eine Einheit zum Bestimmen einer Menge M mit allen Tripeln $r_i$ von aufeinander folgenden Arbeitsschritten $s_{i-1}$, $s_i$, $s_{i+1}$, bei denen die Bearbeitungszeit $t_i$ des Arbeitsschritts $s_i$ kürzer ist als die maximale Zyklenzeit; Einheiten zur Durchführung folgender Schritte (a), (b), (c), (d):
- (a) Bestimmen von Relevanzen der Tripel $r_i$ der Menge M, wobei die Relevanz eines Tripels $r_i$ eine Anzahl Bewegungen oder Beförderungen umfasst, die festgelegt werden, wenn das Werkzeug $w_{i-1}$ einem Platz $p_{i-1}$ und das Werkzeug $w_{i+1}$ einem Platz $p_{i+1}$ zugeordnet werden;
- (b) Bestimmen eines Tripels der Menge M mit der höchsten Relevanz;
- (c) Zuordnen des Werkzeugs $w_i$ des bestimmten Tripels zu einem Platz $p_1$ und/oder des Werkzeugs $w_3$ zu einem Platz $p_3$ derart, dass die Bearbeitungszeit $t_2$ kleiner oder möglichst wenig größer als die Summe der Zeiten ist, die zum Befördern des Werkzeugs $w_1$ vom Übergabepunkt zum Platz $p_1$, zum Bewegen des Beschickers von dort zum Platz $p_3$ und zum Befördern des Werkzeugs $w_3$ von dort zum Übergabepunkt erforderlich ist;
- (d) Entfernen des bestimmten Tripels aus der Menge M;
- Eine Einheit zum Wiederholen der Schritte (a) bis (d), bis die Menge M leer ist; und
- Eine Einheit Zuordnen von unzugeordneten Werkzeugen $w_i$ zu unzugeordneten Plätzen $p_i$ des Werkzeugmagazins.

Die Einheiten sind im nachfolgenden Ausführungsbeispiel nicht explizit in den Figuren dargestellt. Sie können hardwaremäßig und/oder softwaremäßig und/oder firmwaremäßig ausgestaltet sein. Es ist möglich, die jeweiligen Einheiten miteinander in eine Einheit zu integrieren. Diese Einheit kann dann eine Verarbeitungseinheit der Vorrichtung z.B. in Form eines Prozessors sein.

Ein erfindungsgemäßes System umfasst eine Werkzeugmaschine und eine hierin beschriebene Vorrichtung, wobei die Vorrichtung dazu eingerichtet ist, die Werkzeugmaschine zum Durchführen der Arbeitsschritte der Sequenz zu steuern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei

Figur 1              ein System mit einer Werkzeugmaschine und einem Werkzeugmagazin;

Figur 2              ein Ablaufdiagramm eines Verfahrens zum Zuordnen von Werkzeugen einer Werkzeugmaschine zu Plätzen eines Werkzeugmagazins;

Figur 3              eine beispielhafte Sequenz von Arbeitsschritten einer Werkzeugmaschine;

Figuren 4 bis 7    eine beispielhafte Auswahl von zu platzierenden Werkzeugen;

Figur 8              eine Belegung eines beispielhaften Werkzeugmagazins mit Werkzeugen;

Figur 9              eine beispielhafte Ausgangsanordnung von Werkzeugen im Werkzeugmagazin von Figur 8; und

Figur 10             eine finale Anordnung von Werkzeugen im Werkzeugmagazin von Figur 8 darstellt.

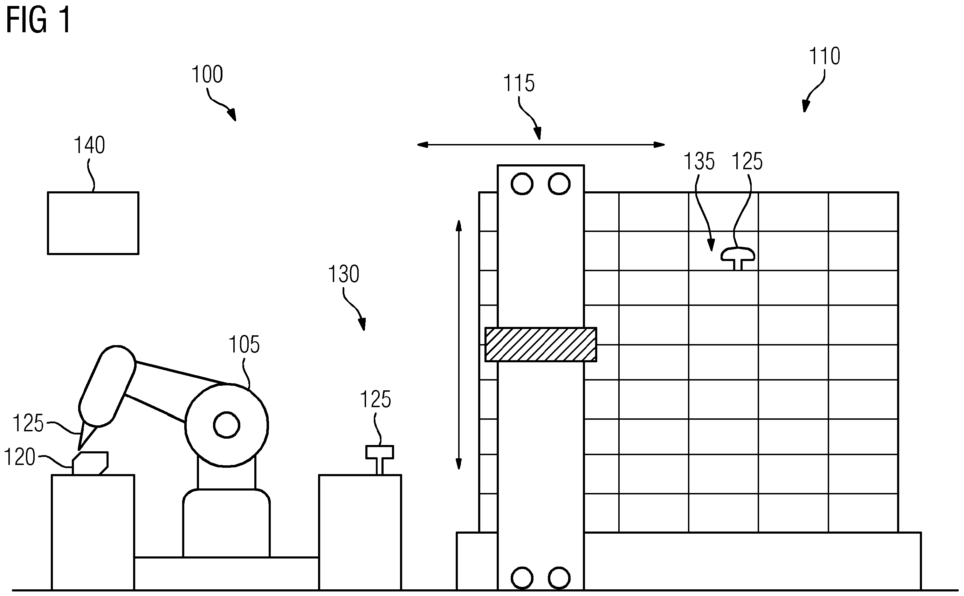

Figur 1 zeigt ein System 100, das eine Werkzeugmaschine 105 und ein Werkzeugmagazin 110 mit einem Beschicker 115 umfasst.

Die Werkzeugmaschine 105 ist dazu eingerichtet, eine Sequenz von Arbeitsschritten auszuführen, um ein Werkstück 120 zu bearbeiten. Dabei umfasst ein Arbeitsschritt ein Aufnehmen eines zugeordneten Werkzeugs 125 an einem Übergabepunkt 130, ein Anwenden des Werkzeugs 125 und ein Ablegen des Werkzeugs 125 am Übergabepunkt.

Ist am Übergabepunkt 130 ein Werkzeug 125 abgelegt, befördert es der Beschicker 115 zu einem zugeordneten Platz 135 im Werkzeugmagazin 110. Von dort bewegt sich der Beschicker 115 zu einem Platz 135, der einem Werkzeug 125 eines bevorstehenden Arbeitsschritts zugeordnet ist, und befördert das benötigte Werkzeug 125 zum Übergabepunkt 130, wo es die Werkzeugmaschine 105 aufnehmen kann, sobald sie ein gegenwärtig verwendetes Werkzeug abgelegt hat. Eine Beförderungszeit eines Werkzeugs ist üblicherweise umso länger, je weiter ein Weg für den Beschicker 115 zwischen dem Platz 135 und dem Übergabepunkt 130 ist. Weitere Einflüsse, beispielsweise eine durch den Beschicker 115 zu vollführende Bewegung oder eine für einen Aufnahme- oder Ablagevorgang erforderliche Zeit, können berücksichtigt werden. Ein Einfluss kann vom Platz 135, vom Werkzeug 125 oder einer Kombination der beiden abhängig sein.

Die Werkzeugmaschine 105 ist bevorzugt eine NC- oder CNC-Maschine, die beispielsweise zum Drehen, Bohren, Fräsen, Rändeln oder zu sonst einer automatisierbaren Bearbeitung verwendet werden kann, etwa Löten, Schweißen oder Besprühen. Das Werkstück 120 umfasst üblicherweise Metall, es kann aber auch beispielsweise Holz, Keramik oder Kunststoff umfassen. In einer Ausführungsform kann das Werkstück 120 gegenüber der Werkzeugmaschine 105 bewegbar sein, entweder durch ein Fördersystem, etwa nach Art eines Förderbands, oder durch eine bewegliche Haltevorrichtung. Die Werkzeugmaschine 105 ist üblicherweise ortsfest oder fest gegenüber dem Werkzeugmagazin 110 ausgebildet.

Das Werkzeugmagazin 110 umfasst eine Vielzahl Plätze 135, auf denen jeweils ein Werkzeug 125 abgelegt werden kann. Üblicherweise sind alle Plätze 135 gleich groß und können jeweils genau ein Werkzeug 125 aufnehmen. Es können auch unterschiedlich große Plätze 135 zur Aufnahme unterschiedlich großer Werkzeuge 125 vorgesehen sein, wobei ein kleines Werkzeug 125 auf einem großen Platz 135 abgelegt werden kann, ein großes Werkzeug 125 aber nicht auf einem kleinen Platz 135. Ein Werkzeug 125 kann auch mehr als einen Platz 135 belegen, beispielsweise weil es teilweise in einen Raum eines benachbarten Platzes 135 hineinragt. Die Plätze 135 können auch unterschiedliche Tragfähigkeiten aufweisen, sodass ein Werkzeug 125 nur an einem Platz 135 abgelegt werden kann, das wenigstens diese Tragfähigkeit anbietet. Auch eine Summe der Belastungen mehrerer Werkzeuge 125 auf mehreren vorbestimmten Plätzen 135 kann beschränkt sein. Beispielsweise kann festgelegt sein, dass die gesamte Masse der auf den Plätzen 135 des Werkzeugmagazins 110 abgelegten Werkzeuge zusammen einen vorbestimmten Wert von beispielsweise ca. 250 kg nicht übersteigen darf.

Das Werkzeugmagazin 110 ist bevorzugt wie dargestellt regalförmig ausgebildet, wobei mehrere Regale mit jeweils mehreren Plätzen 135 einander bezüglich des Beschickers 115 gegenüber stehen können.

Einem Platz 135 ist eine Beförderungszeit zugeordnet, die erforderlich ist, um ein Werkzeug 125 vom Platz 135 durch den Beschicker 115 aufzunehmen, zum Übergabepunkt 130 zu befördern und abzulegen. Die Beförderungszeit in entgegengesetzter Richtung ist üblicherweise gleich groß. In einigen Ausführungsformen weichen die Beförderungszeiten in unterschiedlichen Richtungen voneinander ab, insbesondere konnte an einem Werkzeugmagazin 110 beobachtet werden, dass eine Beförderungszeit eines Werkzeugs 125 von einem Platz 135 zum Übergabepunkt 130 systematisch kürzer als in der Gegenrichtung war. In diesem Fall dauerte das Ablegen des Werkzeugs 125 am Platz 125 durchschnittlich länger als am Übergabepunkt 130.

Den Plätzen 135 sind üblicherweise unterschiedlich lange Beförderungszeiten zugeordnet, wobei ein kurzer euklidischer Abstand eines Platzes 135 zum Übergabepunkt 130 einer kurzen, und ein großer euklidischer Abstand des Platzes 135 zum Übergabepunkt 130 einer langen Beförderungszeit zugeordnet sein kann. Sind mehrere Regale vorgesehen, so kann ein Zugriff auf eines der Regale eine Drehung des Beschickers um eine Hochachse erfordern, wobei die Beförderungszeit eine hierfür erforderliche Zeit umfassen kann.

Die Beförderungszeit eines Platzes 135 kann auch für ein ihm zugeordnetes Werkzeug 125 gelten. Unterliegt die Beförderung unterschiedlicher Werkzeuge 125 unterschiedlichen Faktoren, so können die Beförderungszeigen der Werkzeuge nicht nur von einem Platz, sondern auch von einem ihm zugeordneten Werkzeug 125 abhängig sein. Beispielsweise kann ein Aufnahme- oder Ablageprozess für unterschiedliche Werkzeuge 125 unterschiedlich lange dauern oder eine maximale Beförderungsgeschwindigkeit kann für unterschiedliche Werkzeuge 125 unterschiedlich sein.

Der Übergabepunkt 130 wird der Einfachheit halber als einzelner Ort angenommen, an dem zumindest kurzzeitig gleichzeitig zwei Werkzeuge 125 abgelegt sein können. In der Praxis kann es sich auch um zwei Orte handeln, die üblicherweise nahe beieinander liegen, oder um eine Wechselvorrichtung, die zwei Orte jeweils zur Aufnahme eines Werkzeugs umfasst, die miteinander vertauscht werden können. Der Übergabepunkt 130 kann als Vorrichtung ausgestaltet sein, sodass ein Werkzeug 125 auch ohne die Werkzeugmaschine 105 oder den Beschicker 115 des Werkzeugmagazins 110 am Übergabepunkt 130 ruhen kann. Der Übergabepunkt 130 kann auch als Ort im Raum definiert sein, an dem die Werkzeugmaschine 105 und der Beschicker 115 einander ein Werkzeug 125 übergeben können.

Nach dem Ablegen eines Werkzeugs 125 durch die Werkzeugmaschine 105 benötigt der Beschicker eine gewisse Zeit, um das Werkzeug 125 am Übergabepunkt 130 aufzunehmen, an seinen Platz 135 im Werkzeugmagazin 110 zurückzubringen, sich zum Platz 135 eines folgenden Werkzeugs 125 zu bewegen und dieses Werkzeug 125 an den Übergabepunkt 130 zu bringen. Diese Zeit wird Zykluszeit genannt und hängt im Allgemeinen von den Plätzen 135 und gegebenenfalls von den zugeordneten Werkzeugen 125 ab. Eine maximale Zykluszeit gibt an, wie lange die Zykluszeit für eine beliebige Kombination von Plätzen 135 und Werkzeugen 125 sein kann. Können alle Werkzeuge 125 gleich schnell aufgenommen, befördert und abgelegt werden, so ist die maximale Zykluszeit für ein gegebenes Werkzeugmagazin 110 üblicherweise eine unveränderliche Größe.

Um eine Wartezeit der Werkzeugmaschine 105 zu vermeiden, muss die Zykluszeit kürzer sein als die Bearbeitungszeit der Werkzeugmaschine 105 mit dem Werkzeug 125, das sie nach dem Ablegen des letzten Werkzeugs 125 benötigt. Anders ausgedrückt soll die Bearbeitungszeit eines Arbeitsschritts der Sequenz von Arbeitsschritten stets länger sein als die Zykluszeit bezüglich eines zuvor und eines anschließend verwendeten Werkzeugs 125. Damit dies auch bei kurzen Bearbeitungszeiten sichergestellt ist, wird vorgeschlagen, die Werkzeuge 125 derart Plätzen 135 des Werkzeugmagazins 110 zuzuordnen, dass Werkzeuge 125, die vor oder nach einem Arbeitsschritt mit kurzer Bearbeitungszeit verwendet werden, auf Plätzen 135 mit ausreichend kurzen Beförderungszeiten abzulegen, sodass alle Zykluszeiten von Arbeitsschritten der Sequenz kürzer als die zugeordneten Bearbeitungszeiten sind. Kann dieses Ziel nicht erreicht werden, so sollen die Zykluszeiten der Arbeitsschritte bevorzugt möglichst wenig länger als die zugeordneten Bearbeitungszeiten sein. Insgesamt sollen Wartezeiten der Werkzeugmaschine 105 beim Abarbeiten der Sequenz möglichst gering gehalten und idealerweise ganz vermieden werden.

In der Praxis sind die durchschnittlichen Bearbeitungszeiten einer Sequenz üblicherweise größer als ihre durchschnittlichen Zykluszeiten. Es kann ausreichen, nur solche Zyklenzeiten zu optimieren, die während Bearbeitungszeiten auftreten, die kleiner oder gleich der maximalen Zyklenzeit sind. Für alle anderen Arbeitsschritte ist die Bearbeitungszeit in jedem Fall größer als die Zykluszeit, sodass unabhängig von Beförderungszeiten von oder zu beteiligten Plätzen 135 keine Wartezeit auftreten kann.

Bevorzugt ist eine Vorrichtung 140 vorgesehen, die dazu eingerichtet ist, eine Zuordnung von Werkzeugen 125 auf Plätze 135 des Werkzeugmagazins 110 auf die hierin vorgeschlagene Weise durchzuführen. Dabei umfasst die Vorrichtung 140 bevorzugt einen programmierbaren Mikrocomputer oder Mikrocontroller oder einen Verbund mehrerer solcher Einrichtungen. Die Vorrichtung 140 kann Teil eines Planungssystems sein, das die Sequenz bereitstellt. Die Vorrichtung 140 muss nicht notwendigerweise lokal zur Werkzeugmaschine 105 oder dem Werkzeugmagazin 110 angeordnet sein. Die Vorrichtung 140 kann beispielsweise auch als Server oder Dienst realisiert sein, der bevorzugt über ein Netzwerk kontaktierbar ist. Insbesondere kann die Vorrichtung 140 als Funktionalität in einer Cloud realisiert sein.

Die Vorrichtung 140 kann dazu eingerichtet sein, die Werkzeugmaschine 105 zu steuern. Die Steuerung kann insbesondere die Durchführung der Arbeitsschritte der Sequenz betreffen. Die Steuerung kann auch ein Aufrüsten des Werkzeugmagazins 110 betreffen. Das Aufrüsten kann ein Bewegen eines bereits im Werkzeugmagazin 110 abgelegten Werkzeugs 125 von einem Platz 135 auf einen zugeordneten Platz 135 umfassen. Das Aufrüsten kann auch das Einsortieren eines zusätzlichen Werkzeugs 125 auf einen zugeordneten Platz 135 umfassen. Das zusätzliche Werkzeug 125 kann beispielsweise an einem dedizierten Übergabepunkt vom Beschicker 115 entgegengenommen werden. Das Aufrüsten kann auch ein Entfernen eines Werkzeugs 125 aus dem Werkzeugmagazin 110 umfassen. Dabei kann das entfernte Werkzeug 125 beispielsweise am Übergabepunkt 130 bereitgestellt werden.

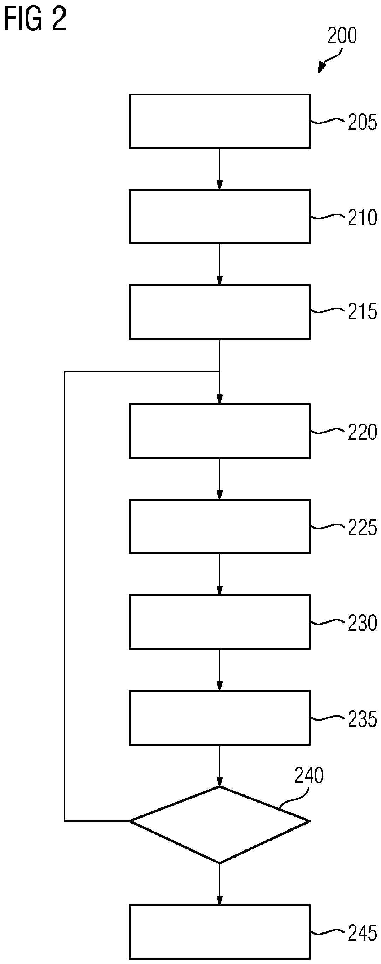

Figur 2 zeigt ein Ablaufdiagramm eines exemplarischen Verfahrens 200 zum Zuordnen von Werkzeugen 125 zu Plätzen 135 eines Werkzeugmagazins 110, vorzugsweise der in Figur 1 gezeigten Art. Ziel des Verfahrens 200 ist eine Zuordnung, die eine Wartezeit der Werkzeugmaschine 105 während des Ausführens einer vorbestimmten Sequenz S von Arbeitsschritten s vermeidet.

In einem Schritt 205 wird die Sequenz S von Arbeitsschritten s erfasst. Bezüglich einer hierin vorgestellten Technik wird die Sequenz S bevorzugt als Eingabe behandelt, die von einer externen Instanz bereitgestellt wird. Jedem Arbeitsschritt s sind ein Werkzeug 125 und eine Bearbeitungszeit t zugeordnet, die hierin ebenfalls als bekannt vorausgesetzt wird. Die Arbeitsschritte s haben eine vorbestimmte Reihenfolge innerhalb der Sequenz S und können zur leichteren Referenzierung mit Indizes angegeben werden, welche die Reihenfolge nach Art der natürlichen Zahlen reflektiert. Werkzeuge w, Plätze p und Zeiten t tragen jeweils den Index des zugeordneten Arbeitsschritts s.

Ein Arbeitsschritt $s_i$ hat einen vorangehenden Arbeitsschritt $s_{i-1}$ und einen nachfolgenden Arbeitsschritt $s_{i+1}$. So kann beispielsweise leicht ausgedrückt werden, dass während im Betrieb des Systems 100 ein Arbeitsschritt $s_i$ ausgeführt wird, der Beschicker 115 das Werkzeug $w_{i-1}$ des vorangehenden Arbeitsschritts $s_{i-1}$ von der Übergabestelle 130 zum zugeordneten Platz $p_{i-1}$ befördern, sich von dort zu seinem vorbestimmten Platz $p_{i+1}$ bewegen und ein zugeordnetes Werkzeug $w_{i+1}$ von dort zum Übergabepunkt 130 befördern kann. Das im vorangehenden Arbeitsschritt $s_{i-1}$ verwendete Werkzeug $w_{i-1}$ kann auch wegzulegendes Werkzeug 125, das im Arbeitsschritt $s_i$ verwendete aktuelles Werkzeug 125 und/oder das im folgenden Arbeitsschritt $s_{i+1}$ verwendete herbeizuschaffendes Werkzeug $w_{i+1}$ genannt werden.

In einem Schritt 210 kann eine maximale Zykluszeit bestimmt werden. Die maximale Zykluszeit kann eine Invariante des Werkzeugmagazins 110 sein oder bezüglich Werkzeugen $w_1$-$w_n$ bestimmt werden, die von den Schritten 1-n der Sequenz S umfasst sind. Dabei wird bevorzugt eine pessimistische Bestimmung durchgeführt, indem beispielsweise eine Zykluszeit bestimmt wird, die sich ergibt, wenn zwei Werkzeuge 125 der Sequenz S, die am zeitaufwändigsten zu transportieren sind, Plätzen 135 mit maximalen Abständen zum Übergabepunkt 130 und möglichst maximierten gegenseitigen Abständen zugeordnet werden.

In einem Schritt 215 wird eine Menge M von kritischen Tripeln r bestimmt. Ein Tripel $r_i$ umfasst eine Abfolge von drei aufeinander folgenden Arbeitsschritten $s_{i-1}$, $s_i$, $s_{i+1}$, in der Sequenz S. Kritisch ist ein Tripel $r_i$ dann, wenn die Bearbeitungszeit $t_i$ des mittleren Arbeitsschritts $s_i$ kleiner als die maximale Zykluszeit ist.

In einem Schritt 220 wird bevorzugt zu jedem Tripel $r_i$ in der Menge M eine Relevanz bestimmt. Die Relevanz eines Tripels $r_i$ bemisst sich daran, wie viele Fahrten des Beschickers 115 festgelegt werden, wenn dem Werkzeug $w_{i-1}$ und dem Werkzeug $w_{i+1}$ jeweils ein Platz 135 zugeordnet wird. Betrachtete Fahrten umfassen dabei bevorzugt jede Beförderung oder Bewegung des Beschickers 115, die an einem der Plätze 135 beginnt und/oder endet und die Teil eines kritischen Tripels r der Menge M ist. Jedes kritische Tripel $r_j$ der Menge M kann somit maximal drei Zähler zur Relevanz des Tripels $r_i$ beisteuern: einen für eine Beförderung eines Werkzeugs 125 vom Übergabepunkt 130 zum Platz $p_{j-1}$, einen für eine Bewegung des leeren Beschickers 115 vom Platz $p_{j-1}$ zum Platz $p_{j+1}$, und einen für eine Beförderung eines Werkzeugs 125 vom Platz $p_{j+1}$ zum Übergabepunkt 130.

Anders ausgedrückt kann die Relevanz eines Tripels $r_i$ aus der Menge M bestimmt werden als:

Anzahl $r_j$ mit $w_{j-1} = w_{i-1}$ UND $w_{i-1}$ noch nicht platziert + Anzahl $r_j$ mit $w_{j-1} = w_{i+1}$ UND $w_{i+1}$ noch nicht platziert + Anzahl $r_j$ mit $w_{j+1} = w_{i-1}$ UND $w_{i-1}$ noch nicht platziert + Anzahl $r_j$ mit $w_{j+1} = w_{i+1}$ UND $w_{i+1}$ noch nicht platziert + Anzahl $r_j$ mit $w_{j-1} = w_{i-1}$ UND $w_{j+1} = w_{i+1}$ UND $w_{i-1}$, $w_{i+1}$ noch nicht platziert UND NICHT $w_{i-1} = w_{i+1}$ + Anzahl $r_j$ mit $w_{j-1} = w_{i-1}$ UND $w_{i-1}$ noch nicht platziert UND $w_{i+1}$ ist platziert + Anzahl $r_j$ mit $w_{j-1} = w_{i+1}$ UND $w_{i+1}$ noch nicht platziert UND $w_{i+1}$ ist platziert + Anzahl $r_j$ mit $w_{j+1} = w_{i-1}$ UND $w_{i-1}$ noch nicht platziert UND $w_{i-1}$ platziert + Anzahl $r_j$ mit $w_{j+1} = w_{i+1}$ UND $w_{i+1}$ noch nicht platziert UND $w_{i-1}$ platziert.

In einem Schritt 225 wird ein kritisches Tripel r der Menge M mit der höchsten Relevanz bestimmt. Haben mehrere Tripel r die gleiche, maximale Relevanz, so kann eines der Tripel r beliebig ausgewählt werden. Im Folgenden sei $r_i$ das ausgewählte kritische Tripel.

In einem Schritt 230 werden dem Werkzeug $w_{i-1}$ ein Platz $p_{i-1}$ und dem Werkzeug $w_{i+1}$ ein Platz $p_{i+1}$ derart zugeordnet, dass die Werkzeugmaschine 105 beim Übergang vom Arbeitsschritt $s_i$ zum Arbeitsschritt $s_{i+1}$ eine möglichst geringe, und idealerweise gar keine Wartezeit hat, also die Zykluszeit des kritischen Tripels $r_i$ kleiner als die Bearbeitungszeit $t_i$ ist. Sollte einem der Werkzeuge $w_{i-1}$, $w_{i+1}$ bereits ein Platz 135 zugeordnet sein, so wird bevorzugt nur das jeweils andere neu zugeordnet. Bevorzugt werden bei der Zuordnung Randbedingungen zur Platzierung der Werkzeuge $w_{i-1}$, $w_{i+1}$ im Werkzeugmagazin 110 beachtet, beispielsweise ein Überlappen eines Werkzeugs 125 von einem zugeordneten Platz 135 auf einen benachbarten Platz 135 oder eine Gewichtsrestriktion eines Platzes 135. Dazu können unterschiedliche Platztypen vorbestimmt sein, denen jeweils einer oder mehrere Plätze 135 zugeordnet sind. Ein vorbestimmtes Werkzeug 125 kann dann nur einem Platz 135 zugeordnet werden, für dessen Platztyp es geeignet ist. In einer weiteren Ausführungsform kann ein Platz 135 des Werkzeugmagazins 110 auch gesperrt sein. Diesem Platz 135 kann dann kein Werkzeug 125 mehr zugeordnet werden. Ein Inhalt des Platzes 135 kann bevorzugt auch nicht entfernt oder an einen anderen Ort transportiert werden.

Wie oben beschrieben ist, umfasst die Zykluszeit des Tripels $r_i$ bevorzugt die Gesamtzeit, die der Beschicker 110 benötigt, um das Werkzeug $w_{i-1}$ von der Übergabestelle 130 zu seinem zugeordneten Platz $p_{i-1}$ zu befördern; sich von dort zu einem Platz $p_{i+1}$ zu bewegen, der dem Werkzeug $w_{i+1}$ zugeordnet ist; und das Werkzeug $w_{i+1}$ von dort zum Übergabepunkt 130 zu befördern.

Sollte es nicht gelingen, Plätze $p_{i-1}$ und $p_{i+1}$ zu finden, denen die Werkzeuge $w_{i-1}$, $w_{i+1}$ zugeordnet werden können, kann das Verfahren 200 abgebrochen werden. Dies kann beispielsweise der Fall sein, wenn eines der verbleibenden Werkzeuge $w_{i-1}$, $w_{i+1}$ zu groß für alle noch freien Plätze 135 ist. In diesem Fall kann das Verfahren 200 die leere Menge ausgeben, um anzuzeigen, dass keine passende Lösung gefunden werden konnte.

Ein kritisches Tripel $r_i$, dessen Werkzeuge $w_{i-1}$ und $w_{i+1}$ jeweils einem Platz 135 zugeordnet sind, können für die Bestimmung der Relevanz eines kritischen Tripels r keinen Beitrag mehr leisten. Das zuletzt gewählte Tripel $r_i$ wird daher bevorzugt in einem Schritt 235 aus der Menge M entfernt.

In einem Schritt 240 kann überprüft werden, ob die Menge M noch Tripel $r_i$ enthält. Ist dies der Fall, so kann das Verfahren 200 mit dem Schritt 220 fortfahren und eine weitere Iteration durchlaufen. Andernfalls kann die Iteration beendet werden.

Die Iteration der Schritte 220 - 240 orientiert sich bei der Wahl eines Tripels $r_i$, dessen Werkzeuge $w_{i-1}$ und $w_{i+1}$ Plätzen 135 zugeordnet werden, an einem maximalen zu erzielenden Effekt. Das Verfahren 200 arbeitet insofern nach Art eines Greedy-Algorithmus.

In einem Schritt 245 können schließlich nicht zugeordnete Plätze 135 und nicht zugeordnete Werkzeuge 125 einander zugeordnet werden. Die Zuordnung ist üblicherweise unkritisch, da sichergestellt sein kann, dass aus der Zuordnung keine Wartezeit der Werkzeugmaschine 105 folgen kann. Zur Minimierung von Fahrtwegen des Beschickers 115 kann eine Heuristik eingesetzt werden, der Plätze 135 mit kurzen Beförderungszeiten und insbesondere einem kurzen Abstand zum Übergabepunkt 130 bevorzugt.

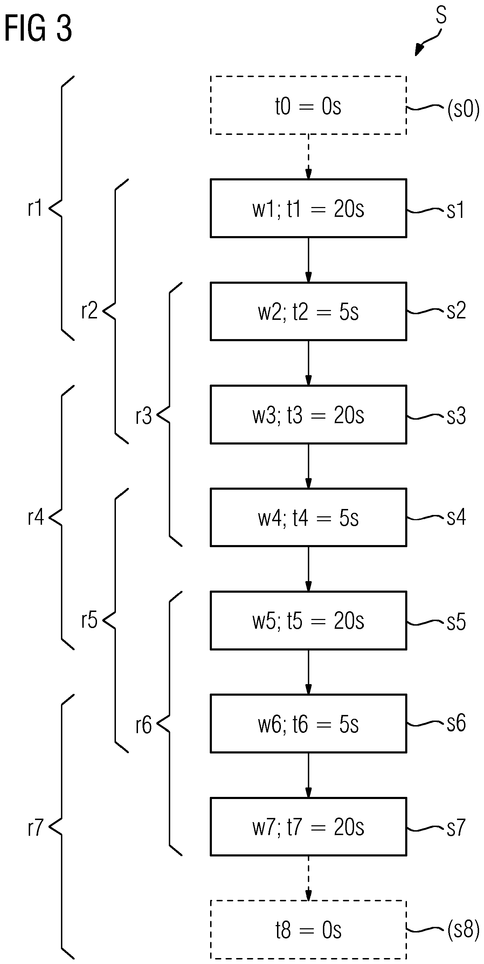

Figur 3 zeigt eine beispielhafte Sequenz S, anhand derer das Verfahren 200 im Folgenden exemplarisch durchgespielt werden soll.

Die Sequenz S umfasst Schritte $s_1$-$s_7$, denen jeweils ein Werkzeug $w_1$-$w_7$ und eine Bearbeitungszeit $t_1$-$t_7$ zugeordnet ist. Daraus können Tripel $r_2$ bis $r_6$ gebildet werden. Der erste Arbeitsschritt $s_1$ hat keinen vorangehenden und der letzte Arbeitsschritt $s_7$ keinen nachfolgenden Arbeitsschritt, sodass streng genommen keine Tripel $r_1$ oder $r_7$ gebildet werden können. Zur einfacheren Behandlung können "leere" Arbeitsschritte $s_0$ und/oder $s_8$ angenommen werden, denen jeweils kein Werkzeug 125 zugeordnet ist und deren Bearbeitungszeit t null beträgt.

Eine maximale Zykluszeit des Werkzeugmagazins 110 beträgt in diesem Beispiel 18s. Von den sieben möglichen Tripeln r sind also nur drei kritisch, nämlich $r_2$, $r_4$ und $r_6$, deren Bearbeitungszeiten (jeweils 5s) die maximale Zykluszeit (18s) unterschreiten. Die Menge M enthält die drei Tripel $r_2$, $r_4$ und $r_6$.

Erste Iteration:

Das erste kritische Tripel $r_2$ betrifft Bewegungen des Beschickers bezüglich der Werkzeuge $w_1$ und $w_3$. Die Relevanz des ersten kritischen Tripels $r_2$ bestimmt sich zu 4 (in den folgenden Tabellen steht ÜP für den Übergabepunkt 130):

| Tripel | Beförderung | Bewegung | Fahrten |
|--------|-------------|----------|---------|
| r2 | w1 von ÜP zu p1; w3 von p3 zu ÜP | p1 zu p3 | 3 |
| r4 | w3 von ÜP zu p3 | - | 1 |
| r6 | - | - | 0 |

Das zweite kritische Tripel $r_4$ betrifft Bewegungen des Beschickers bezüglich der Werkzeuge $w_3$ und $w_5$. Die Relevanz des zweiten kritischen Tripels $r_4$ beträgt 5:

| Tripel | Beförderung | Bewegung | Fahrten |
|--------|-------------|----------|---------|
| r2 | w3 von p3 zu ÜP | - | 1 |
| r4 | w5 von p5 zu ÜP; w3 von ÜP zu p3; | p3 zu p5 | 3 |
| r6 | w5 von ÜP zu p5 | - | 1 |

Das dritte kritische Tripel $r_6$ betrifft Bewegungen des Beschickers bezüglich der Werkzeuge $w_5$ und $w_7$. Die Relevanz des dritten kritischen Tripels $r_6$ beträgt 4:

| Tripel | Beförderung | Bewegung | Fahrten |
|--------|-------------|----------|---------|
| r2 | - | - | - |
| r4 | w5 von p5 zu ÜP; | | 1 |
| r6 | w5 von ÜP zu p5; w7 von p7 zu ÜP | P5 zu p7 | 3 |

Das kritische Tripel r mit der höchsten Relevanz ist $r_4$, es werden also die Werkzeuge $w_3$ und $w_5$ jeweils einem Platz 135 zugeordnet, sodass beim Abarbeiten von $r_4$ eine möglichst kurze, idealerweise gar keine Wartezeit für die Werkzeugmaschine 105 entsteht. Beispielsweise können die Werkzeuge $w_3$ und $w_5$ an den beiden Plätzen $p_3$ und $p_5$ mit dem geringsten Abstand zum Übergabepunkt 135 platziert werden. Nach dem Zuordnen wird das zweite Tripel $r_4$ aus der Menge M entfernt.

Zweite Iteration:

Die Relevanz des ersten kritischen Tripels $r_2$ beträgt 2:

| Tripel | Beförderung | Bewegung | Fahrten |
|--------|-------------|----------|---------|
| r2 | w1 von ÜP zu p1 | p1 zu p3 | 2 |
| r4 | - | - | 0 |
| r6 | - | - | 0 |

Die Relevanz des dritten kritischen Tripels $r_6$ beträgt 2:

| Tripel | Beförderung | Bewegung | Fahrten |
|--------|-------------|----------|---------|
| r2 | - | - | - |
| r4 | - | - | - |
| r6 | w5 von ÜP zu p5 | p5 zu p7 | 2 |

Da beide Tripel $r_2$ und $r_6$ gleich hohe Relevanz haben, wird eines davon beliebig ausgewählt, vorliegend $r_2$. Die Werkzeuge $w_1$ und $w_3$ werden derart im Werkzeugmagazin 110 platziert, dass für die Werkzeugmaschine 105 beim Abarbeiten von $r_2$ eine möglichst kurze, idealerweise gar keine Wartezeit entsteht. Bevorzugt werden die Werkzeuge $w_1$ und $w_3$ an Plätzen $p_1$, $p_3$ nahe am Übergabepunkt 130 platziert. Weiter bevorzugt werden nahe beieinander liegende Plätze $p_1$, $p_3$ gewählt, um auch die Dauer der Leerfahrt von $p_1$ nach $p_3$ zu minimieren. Die Dauer einer Leerfahrt zwischen zwei Plätzen 135 kann beispielsweise empirisch bestimmt werden und einem oder beiden Plätzen 135 zugeordnet sein. Alternativ kann die Dauer der Leerfahrt aufgrund von absoluten oder relativen Koordinaten der Plätze 135 algorithmisch bestimmt werden.

Nach dem Zuordnen wird das erste Tripel $r_2$ aus der Menge M entfernt, sodass nur noch das dritte Tripel $r_3$ in der Menge M verbleibt. Dieses hat automatisch die höchste Relevanz, sodass die ihm zugeordneten Werkzeuge $w_5$ und $w_7$ platziert werden, bevor die Iterationen enden.

Dann sind alle Werkzeuge 125, die wenigstens ein kritisches Tripel r betreffen, jeweils einem Platz 135 zugeordnet. Verbleibende Werkzeuge $w_2$, $w_4$ und $w_6$ können dann beliebigen noch freien Plätzen 135 zugeordnet werden.

## Genaue Beschreibung der Platzzuweisung

Im Schritt 215 wird die Menge M aller kritischen Tripel $r_i$ bestimmt.

Entsprechend einer Relevanzfunktion werden nacheinander die Tripel mit der höchsten Relevanz ausgewählt und im Werkzeugmagazin 110 platziert. Dabei ändert sich die Menge M und die Relevanzfunktion nach jeder Platzierung. Der Algorithmus terminiert, wenn die Menge M leer ist, oder wenn für ein ausgewähltes Tripel $r_i$ kein Platz gefunden wurde.

Dieses Vorgehen kann in Pseudo-Code wie folgt geschrieben werden:

```
Input: S // Sequenz von Arbeitsschritten
Output: Zuordnung von Werkzeugen 125, die Arbeitsschritten
von S zugeordnet sind, zu Plätzen 135
// initialisieren
M <- initializeToolSwaps(S)
// greedy place tool-swaps
while success AND (M ≠ Ø) do
        // Werkzeugtausch mit der höchsten Relevanz bestimmen
        r <- arg max_{r∈M} rel(r)
        // place highest relevance tool swap


                success, placement <- place(placement, r)
                // update set of tool swaps
                M <- updateToolSwaps(placement, S)
        end
        if success then
            return placement
        end
        // no feasible placement found
        return Ø
```

Greedy-Auswahlfunktion

Die Auswahlfunktion

$$\arg\max_{r\in M} \mathrm{rel}(r)$$

soll die kritischen Tripel bevorzugten, bei denen die Platzierung der Werkzeuge 125 einen möglichst großen Einfluss auf die Gesamtwartezeit hat. Anders ausgedrückt werden durch die Platzzuweisung an das oder die noch nicht platzierten Werkzeuge 125 des Tripels für möglichst viele zusätzliche kritische Tripel r die Zyklenzeiten festgelegt. Dabei werden lediglich Platzierungen der zu bewegenden Werkzeuge w berücksichtigt.

Für ein kritisches Tripel r = ($w_1$, $w_2$, $w_3$) sei

$$\hat{r} = \{w_1, w_3\}$$

die Menge der zu bewegenden Werkzeuge 125 und

$$\bar{r} = \{w \in \hat{r} \,|\, \text{w noch nicht platziert}\}$$

die Menge der noch nicht platzierten, zu bewegende Werkzeuge von r. Die Relevanz rel(r) von r bestimmt sich als Summe von Gewichten

$$rel(r) = \sum_{r' \in M \wedge \hat{r}' \cap \bar{r} \neq \emptyset} weight_{M,S}(r')$$

über alle kritischen Tripel r'=($w_1'$, $w_2'$, $w_3'$), die ein oder zwei zu bewegende Werkzeuge 125 mit $\bar{r}$ gemeinsam haben. Dabei ist das Gewicht $weight_{M,S}(r')$ von r' die gewichtete Häufigkeit, mit welcher der Werkzeugwechsel r' in der Sequenz S der Arbeitsschritte als kritisches Tripel auftritt. Die Gewichtung von r' ist drei, falls $|\hat{r}' \cap \bar{r}|$ = 2.

Sonst haben r und r' genau ein zu bewegendes Werkzeug 125 gemeinsam. In diesem Fall ist die Gewichtung für r' zwei für $|\bar{r}|$ = 1, und andernfalls, $|\bar{r}|$ = 2, eins.

Anders ausgedrückt:

$weight_{M,S}(r')$ = Anzahl der neu festgelegten r' betreffenden Bewegungen des Beschickers 115 (Weglegen von w1'; Leerfahrt von $p_1$ zu $p_3$; und Holen von $w_3'$), falls die Werkzeuge $w_1$ und $w_3$ von r im Werkzeugmagazin 110 platziert würden. Multipliziert mit der Häufigkeit mit der der Werkzeugwechsel $w_1$, $w_3$ in der Sequenz S als kritisches Tripel auftritt.

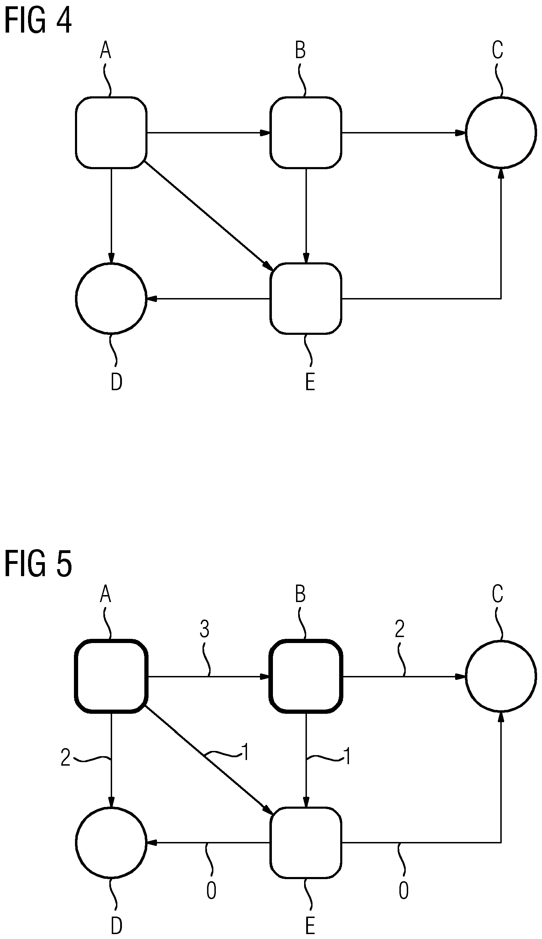

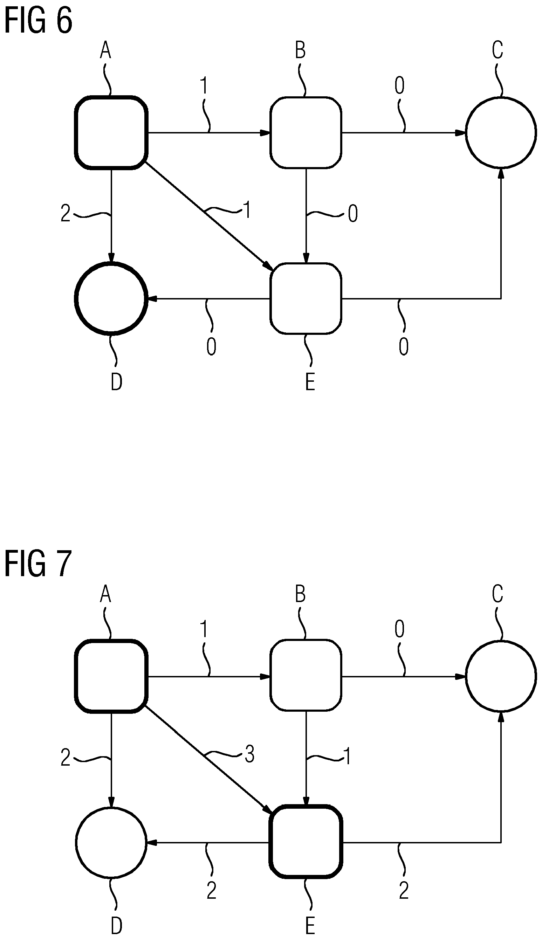

Figuren 4-7 zeigen jeweils eine Darstellung eines weiteren Beispiels zur Erläuterung der Auswahl eines Tripels r aus der Menge M. Es sind fünf Werkzeuge A, B, C, D und E vorgesehen. Sind zwei Werkzeuge A-E mit einem Pfeil miteinander verbunden, so bilden die zu bewegende Werkzeuge $w_1$ und $w_3$ zusammen mit einem weiteren (nicht dargestellten) Werkzeug $w_2$ ein kritisches Tripel r. Der Pfeil geht vom wegzulegenden Werkzeug A-E aus und endet am zu holenden Werkzeug A-E. Insgesamt sind sieben kritische Tripel r dargestellt. Werkzeuge 125, die nicht von einem kritischen Tripel r umfasst sind, sind in Figur 4 nicht dargestellt. Werkzeuge A-E, denen bereits Plätze 135 zugewiesen sind, sind in Kreisen dargestellt; noch unzugeordnete Werkzeuge A-E sind in abgerundeten Vierecken dargestellt.

Zur Erläuterung der Figuren 4-10 wird für ein Tripel r = ($w_{i-1}$, $w_i$, $w_{i+1}$) eine Notation der Art r = (A, B) verwendet, bei der nur das Werkzeug A = $w_{i-1}$, das zurückgelegt werden soll, und das Werkzeug B = $w_{i+1}$, das geholt werden soll, dargestellt ist. Das Werkzeug $w_1$, das während der Bewegungen benutzt wird, ist nicht angeführt.

In der Situation von Figur 4 gibt es noch sieben kritische Tripel r, bei denen noch wenigstens ein Werkzeug w zu platzieren ist: (A, B); (A, D); (A, E); (B, C); (B, E); (E, C) und (E, D).

Für die das Werkzeug A enthaltenden Tripel (A, B); (A, D) und (A, E) sind in den Figuren 5 bis 7 die Gewichtungen der Werkzeugtripel, zur Bestimmung der Relevanzen rel(A, B); rel(A, D) und rel(A, E), an den Pfeilen dargestellt. Treten alle Werkzeugtripel genau einmal auf, so ergeben sich folgende Relevanzen: rel(A, B) = 9; rel(A, D) = 4; rel(A, E) = 11. Das Tripel (A, E) hat somit die höchste Relevanz.

Tritt jedoch beispielsweise das Tripel (A, B) fünfmal und alle anderen nur einmal auf, so ergeben sich die Relevanzen rel(A, B) = 21; rel(A, D) = 8; rel(A, E) = 15. Hier hat das Tripel (A, B) die höchste Relevanz.

Platzierung

Die Zuordnung (oder: Platzierung)
place(placement, r)
eines Werkzeugtripels r = ($w_{i-1}$, $w_1$, $w_{i+1}$) an Plätze 135 kann nach einer Schätzung der durch die Zuordnung entstehenden Wartezeit für den Beschicker 115 erfolgen. Mindestens eines der Werkzeuge $w_{i-1}$, $w_{i+1}$ des Tripels r ist noch nicht platziert, sodass einer oder zwei Plätze 135 auszuwählen sind. Da die Auswahl lediglich eines Platzes 135 ein einfacher Spezialfall ist, wird im Folgenden exemplarisch von zwei auszuwählenden Plätzen $p_{i-1}$ und $p_{i+1}$ für die Werkzeuge $w_{i-1}$ und $w_{i+1}$ eines Tripels ausgegangen.

Zu bewerten sind nur Plätze 135, welche die zu platzierenden Werkzeuge $\bar{r}$ aufnehmen können. Die Werkzeuge 125 müssen auf den Plätzen 135 jeweils zulässig sein und bei einer aktuellen Belegung von Plätzen 135 des Werkzeugmagazins 110 muss genügend Platz für die zu platzierenden Werkzeuge 125 vorhanden sein. Dazu können jeweils benachbarte Plätze 135 eines Platzes 135 mit betrachtet werden (Nebenplatzbetrachtung). Auch eine Gesamtbelastung des Werkzeugmagazins 110 kann berücksichtigt werden.

Da die beiden zu platzierenden Werkzeuge 125 in ihren Ausmaßen und Beschränkungen nicht identisch sein müssen, sind hier betrachtete Platzpaare geordnet und umfassen die Plätze $p_{i-1}$ und $p_{i+1}$. Ausgewählt wird dasjenige Platzpaar, welches die geringste Wartezeit für die um diese Zuordnung erweiterte partielle Belegung des Werkzeugmagazins 110 ergibt. Statt die Wartezeit abzuschätzen können für die sich mit r überschneidenden, kritischen Werkzeugwechsel

$$\{r' \in M \mid \hat{r}' \cap \bar{r} \neq \emptyset\}$$

die Gesamtzeiten bestimmt und aufsummiert werden. Für alle vollständig platzierten kritischen Werkzeugtripel kann die exakte Auswechselzeit bestimmt werden. Von den restlichen kritischen Werkzeugtripeln, den nicht vollständig platzierten, werden nur die durch die neu platzierten Werkzeuge $\bar{r}$ terminierten Teile der Gesamtwechselzeit summiert, also die Fahrtzeit mit dem Werkzeug vom Platz 135 zum Übergabepunkt 130 bzw. umgekehrt. Ausgewählt wird das Platzpaar mit der geringsten Gesamtwechselzeit.

Erneut Bezug nehmend auf Figur 5 sollen Plätze 135 für die Werkzeuge A und B gefunden werden. D. h., während der Platzwahl werden die Werkzeuge A und B ebenfalls als platziert betrachtet. Die Werkzeugtripel (A, B), (A, D) und (B, C) sind somit vollständig platziert und ihre Wechselzeit kann berechnet werden, wenn die Plätze für A und B gewählt sind. Für die teilweise platzierten Tripel (A, E) und (B, E) können nur die Zeiten für das Zurückbringen von A bzw. das Holen von B berechnet werden. Die Tripel (D, E) und (E, C) haben keinen Bezug zum zu platzierenden Tripel (A, B) und werden nicht betrachtet.

Auswahlverbesserung

Die beschriebene Platzzuweisungsheuristik führt schon zu sehr guten Ergebnissen. In einigen Fällen werden jedoch Werkzeuge 125 mit geringem Potential an Wartezeiteinsparung zeitlich vor Werkzeugen 125 mit hohem Einsparpotential platziert. Sowohl in der Auswahlfunktion als auch bei der Platzauswahl werden alle kritischen Werkzeugtripel r als gleichwertig betrachtet. Dadurch können bei der Relevanzfunktion und/oder bei der Platzauswahl Werkzeugtripel r mit geringem Einsparpotential überbewertet werden.

Um Werkzeugtripel r mit hohem und geringem Einsparpotential voneinander zu unterscheiden, definieren wir in einer Ausführungsform ein Werkzeugtripel ($w_{i-1}$, $w_i$ $w_{i+1}$) als $\alpha$-kritisch, wenn die Bearbeitungszeit t des Werkzeugs $w_i$ kleiner ist als die Summe aus $\alpha$ und der minimalen Zyklenzeit der noch nicht vollständig platzierten kritischen Werkzeugtripel r.

Die Platzzuweisungsheuristik kann in jeder Iteration die Menge M der kritischen Werkzeugtripel r aktualisieren. Diese Menge M kann durch die Menge der $\alpha$-kritischen Werkzeugtripel r ersetzt werden. Dabei ist $\alpha$ bevorzugt entsprechend dem Abstand zwischen minimaler und maximaler Zyklenzeit des Werkzeugmagazins 110 gewählt. Für die beispielhaft betrachteten Werkzeugmagazine 110 hat sich ein Wert von ca. 3 Sekunden für $\alpha$ als günstig erwiesen.

Ressourcenbeschränkungen

Die Platzzuweisungsheuristik weist nacheinander Werkzeugen 125 aus kritischen Tripeln r Magazinplätze 135 zu und stellt dabei sicher, dass die entsprechende Belegung des Magazins zulässig ist. Nach Termination der Heuristik kann es sein, dass sich die verbleibenden Werkzeuge 125 nicht mehr so im Werkzeugmagazin 110 unterbringen lassen, dass eine zulässige Belegung des Werkzeugmagazins 110 mit allen Werkzeugen 125 entsteht. Insbesondere bei vollen Werkzeugmagazinen 110 und bei Werkzeugen 125, welchen nur wenige bestimmte Plätze 135 zugewiesen werden können, ist die von der Heuristik bestimmte Teilbelegung des Magazins oft nicht mehr zu einer zulässigen vollständigen Magazinbelegung erweiterbar. Umfasst das Werkzeugmagazin 110 ein Regalmagazin, sollen üblicherweise viele verschiedene Werkzeuge 125 im Werkzeugmagazin 110 platziert werden, sodass ein hoher Füllgrad des Werkzeugmagazins 110 üblich ist.

Es gibt unterschiedliche Möglichkeiten, um eine hierin vorgestellte Heuristik dieser Situation anzupassen. So kann man die Heuristik um eine Suche, z. B. Backtracking erweitern. Auf Grund der hohen Symmetrie bei den Platzierungsmöglichkeiten von Werkzeugen 125 kann es erforderlich sein, den Suchraum stark einzuschränken, um die Laufzeit des Verfahrens weiterhin gering zu halten.

Alternativ kann die Heuristik schon bei der Bestimmung der Teilbelegung die restlichen Werkzeuge 125 mitberücksichtigen. Anders ausgedrückt kann die Heuristik weiterhin sukzessiv die kritischen Werkzeuge 125 platzieren, garantiert jedoch bei jeder Platzierung, dass eine zulässige Erweiterung zu einer vollständigen Magazinbelegung existiert.

Wir verfolgen in einer weiteren Ausführungsform den letztgenannten Ansatz und erweitern die von der Heuristik bestimmte partielle Belegung des Werkzeugmagazins 110 um eine ergänzende partielle Belegung der noch nicht platzierten Werkzeuge 125. Die ergänzende Belegung dient der Heuristik als Garant, dass sich die bisher bestimmte partielle Belegung zu einer zulässigen, vollständigen Belegung des Werkzeugmagazins 110 erweitern lässt. Dadurch kann der Algorithmus in jeder Iteration über eine zulässige Magazinbelegung aller Werkzeuge verfügen.

Die Rekonstruktion des Garanten sollte ressourcensparend erfolgen, da die Heuristik diese sehr häufig aufruft. Daher erfolgt die Rekonstruktion bevorzugt in einem dreistufigen Eskalationsschema. Ist die Rekonstruktion in einer Stufe nicht erfolgreich, so kann versucht werden, die Rekonstruktion mit Hilfe der nächsten Stufe zu erreichen. In jeder Stufe steigt der Aufwand, um die Rekonstruktion zu erreichen. Ist keine Stufe erfolgreich, so kann eine unzulässige Ressourcenlage zurückgemeldet werden.

Die Platzzuweisungsheuristik kann die gewählten Plätze als unzulässig betrachten und weiter nach geeigneten Plätzen für das zu platzierende kritische Werkzeugtripel r suchen. Die drei Stufen verwenden unterschiedliche Ansätze zur Rekonstruktion:

1. Platztausch: Es wird versucht, die bisherigen Plätze 135 aller mindestens zu versetzenden Werkzeuge 125 zu tauschen.

2. Best-Fit-Platzierung: Es werden mehr als nur die mindestens zu versetzenden Werkzeuge 125 entfernt. Mit einer Best-Fit-Strategie werden die entfernten Werkzeuge 125 auf freien Plätzen 135 des Werkzeugmagazins 110 platziert.

3. Gemischt Ganzzahliges Programm: Wie im vorigen Schritt werden mehrere Werkzeuge 125 aus der Belegung entfernt. Diese werden unter Verwendung eines gemischt-ganzzahligen Programms neu platziert.

Die vorgeschlagenen Stufen im Einzelnen:

1. Platztausch

In der ersten Stufe wird versucht, den Garanten (ergänzende Belegung des Werkzeugmagazins 110) mit minimalen Veränderungen aus dem bisherigen Garanten zu bestimmen. Die Platzzuweisungsheuristik platziert sukzessiv jeweils ein Werkzeugtripel r, wobei mindestens eines der Werkzeuge von r noch keinen endgültigen Platz zugeordnet hat; $\bar{r} \neq \varnothing$. Werkzeug(e) $\bar{r}$ können sich auf ihren zugewiesenen Plätzen 135 unzulässig mit Werkzeugen 125 aus dem bisherigen Garanten (ohne $\bar{r}$) überschneiden. Werden aus dem bisherigen Garanten alle sich mit $\bar{r}$ überschneidenden Werkzeuge 125 (Nebenplatzbetrachtung) entnommen, so ist der reduzierte Garant zulässig, aber nicht mehr vollständig. Die entnommenen Werkzeuge 125 werden jetzt auf den vorher von $\bar{r}$ im Garanten verwendeten Plätzen 135 platziert. Ist das nicht möglich, so ist der Platztausch gescheitert.

2. Best-Fit-Platzierung

Wenn die erste Stufe fehlschlägt, so bieten die bisherigen Plätze von $\bar{r}$ im Garanten zu wenig Spielraum, um die überschneidenden Werkzeuge 125 unterzubringen. Dies kann unterschiedliche Ursachen haben, etwa weil aufgrund der Nebenplatzbetrachtung nicht genügend Raum zur Verfügung steht, oder weil nicht alle überschneidenden Werkzeuge 125 auf den bisherigen Plätzen 135 von $\bar{r}$ zulässig sind. In der zweiten Stufe werden daher in einer bevorzugten Ausführungsform die Möglichkeiten der Zuordnung von neuen Plätzen 135 für Werkzeuge 125 aus dem Garanten vergrößert. Es werden nicht nur die überschneidenden Werkzeuge 125 entfernt, sondern alle Werkzeuge 125 aus einer geeigneten Nachbarschaft, sowohl an den neu zugeordneten Plätzen 135 als auch an den bisherigen Plätzen von $\bar{r}$ im Garanten. Eine geeignete Nachbarschaft ist z.B. die gesamte Spalte. Die entfernten Werkzeuge 125 werden nun für den Garanten neu platziert.
Ein Algorithmus hierzu kann in Pseudo-Code wie folgt geschrieben werden.

```
Input: F⊂W×L // feste Zuordnung, W̃⊂W zu platzierende
Werkzeuge;
Output: Gruppe von Werkzeugen aus W̃ oder ∅;
G <- Werkzeuge aus W̃ gruppieren; nicht unterscheidbar
bezüglich Platzierung;
Sortiere G bezüglich absteigendem Bruchteil verbleibenden
Platzes im Werkzeugmagazin 110;
placement = ∅;
forall g∈G do
        P <- placeGroup(g);
        if P=∅ then
                return ∅;
        fi;
        placement <- placement∪P;
end;
return placement;


Function placeGroup(g)
        S <- sammle aufeinander folgende freie Plätze p in
Segmente ;
        sortiere S;
        ordne Werkzeuge aus g sukzessive Segmenten zu;
        if success then
            return placement;
        end;
        // keine zulässige Platzierung gefunden
        return ∅;
end;
```

Der oben skizzierte Rekonstruktions-Algorithmus gruppiert zunächst die Werkzeuge 125 in Gruppen äquivalenter Werkzeuge 125 bezüglich ihrer Möglichkeiten der Platzierung; die Werkzeuge 125 haben den gleichen Platzbedarf, die gleichen zulässigen Magazinplätze etc. Die Reihenfolge, in der die Werkzeuge 125 aus einer Gruppe platziert werden, ist irrelevant in Bezug auf die Zulässigkeit. Die Gruppen werden nach ihrer relativen Flexibilität bezüglich der möglichen Platzzuweisungen sortiert. Gibt es beispielsweise für eine Gruppe nur genauso viele zulässige Plätze 135 wie es Werkzeuge 125 in der Gruppe gibt, so ist diese Gruppe maximal inflexibel; es kann nur noch die exakte Platzzuordnung permutiert werden. Die Gruppen werden bevorzugt nacheinander mit steigender Flexibilität bearbeitet.

Für jede Gruppe ist zu entscheiden, welche Plätze 135 den Werkzeugen 125 der Gruppe zugewiesen werden. Insbesondere bei übergroßen Werkzeugen 125 oder bei Werkzeugen 125, die außer ein oder mehreren Plätzen 135 auch einen oder mehrere halbe Plätze 135 beanspruchen, ist bevorzugt auf eine gute Ausnutzung der Plätze 135 zu achten. Dazu können Segmente zusammenhängender Plätze 135 des Werkzeugmagazins 110 bestimmt werden. Für eine Gruppe können die Plätze 135 weiter bevorzugt nach einem best-fit-Verfahren ausgewählt werden. Beispielsweise sollen die Werkzeuge 125, die zusätzlich jeweils einen oder mehrere halbe Plätze 135 einnehmen, nach Möglichkeit nebeneinander platziert werden, da dann zwei Werkzeuge 125 einen Platz 135 des Werkzeugmagazins 110 kollisionsfrei halb belegen können.

3. Gemischt Ganzzahliges Programm

Im selten auftretenden Fall, dass die ersten beiden Stufen nicht erfolgreich sind, kann in einem letzten Schritt die Zulässigkeit mit Hilfe eines gemischt ganzzahligen Programms (auch: "Mixed Integer Programming", MIP) überprüft werden.

Ziel dieses gemischt-ganzzahligen Programms ist es, die Anzahl der platzierten Werkzeuge 125 zu maximieren. Ist der optimale Zielfunktionswert kleiner als die Anzahl der neu zu platzierenden Werkzeuge 125, so gibt es keine zulässige Platzzuordnung für alle Werkzeuge 125. In diesem Fall wird die Rekonstruktion des Garanten als gescheitert betrachtet und die Platzauswahl auf Grund der Ressourcenbeschränkung als unzulässig zurückgewiesen.

Ergebnisse

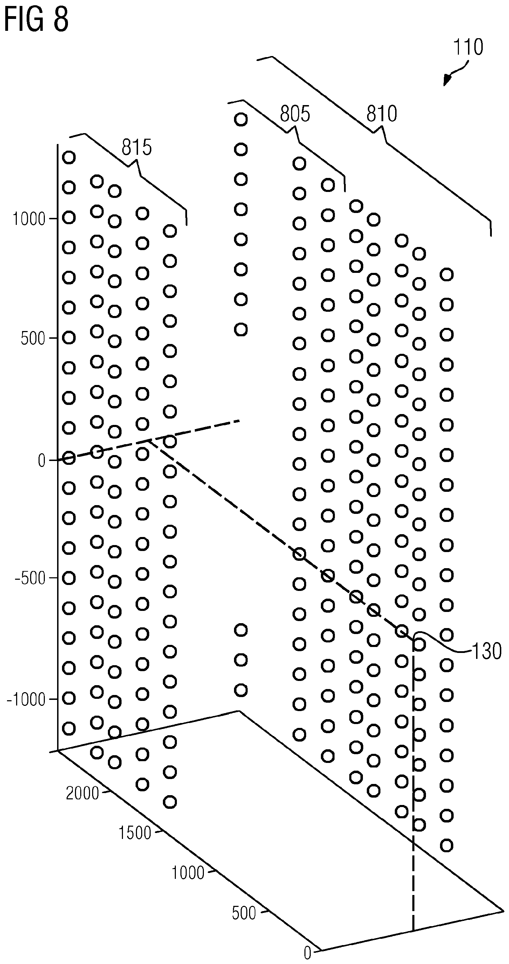

Figur 8 zeigt ein beispielhaftes, konkretes Regalmagazin 110 mit 251 Magazinplätzen 135, an dem die hierin beschriebene Heuristik exemplarisch getestet wurde. Die Plätze 135 verteilen sich auf 13 Spalten, von denen nur drei Spalten 805 für besonders schwere Werkzeuge 125 zulässig sind. Eine rechte Seite 810 mit acht Magazinspalten ist die Hauptseite, eine linke Seite 815 mit fünf Magazinspalten ist die Gegenseite. Für einen Zugriff auf der Gegenseite 815 muss sich der Beschicker 115 um eine Hochachse drehen und gegebenenfalls nach dem Zugriff wieder zurückdrehen. Die dargestellten Koordinatenachsen sind beispielhaft. Der Übergabepunkt 130 für die Werkzeugmaschine 105 befindet sich etwa in halber Höhe zwischen der Hauptseite 810 und der Gegenseite 815 und ist hier auf den Koordinaten (0, 0, 400) dargestellt.

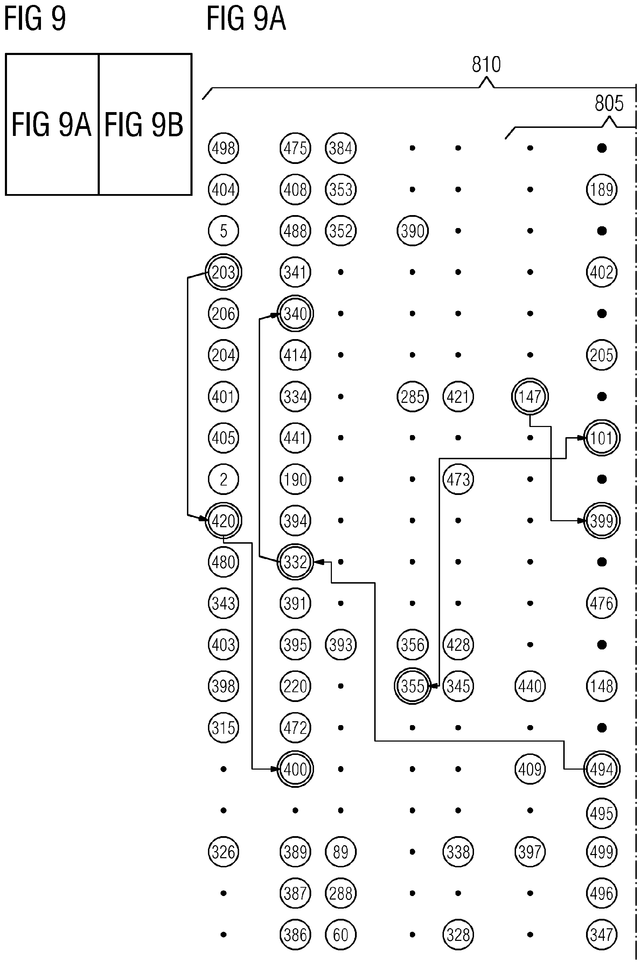

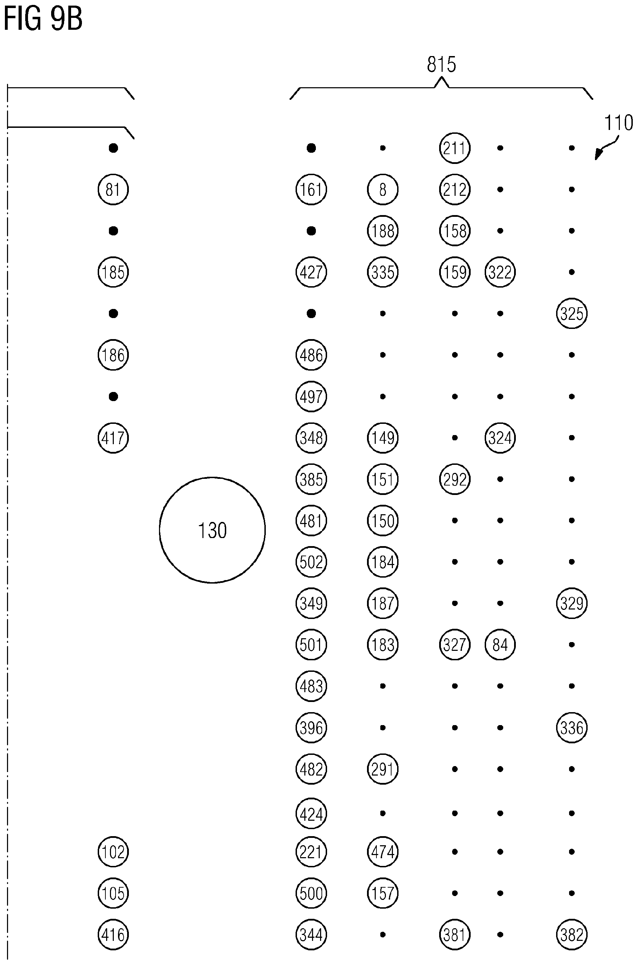

Figur 9 zeigt eine beispielhafte Ausgangsanordnung des Werkzeugmagazins 110 aus Figur 8. Das Werkzeugmagazin 110 ist der Übersichtlichkeit halber schematisch zweidimensional, aber maßstabsgetreu in jeder Seite dargestellt, links die Hauptseite 810 und rechts die Gegenseite. Der Übergabepunkt 130 für den Beschicker 115 liegt hier bei (0, 0). 815.

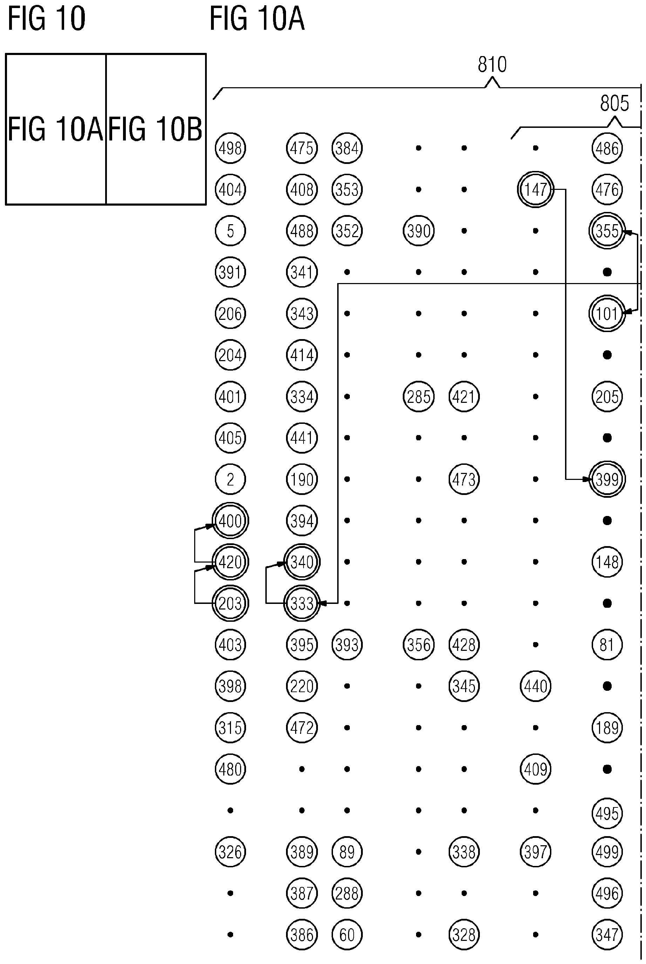

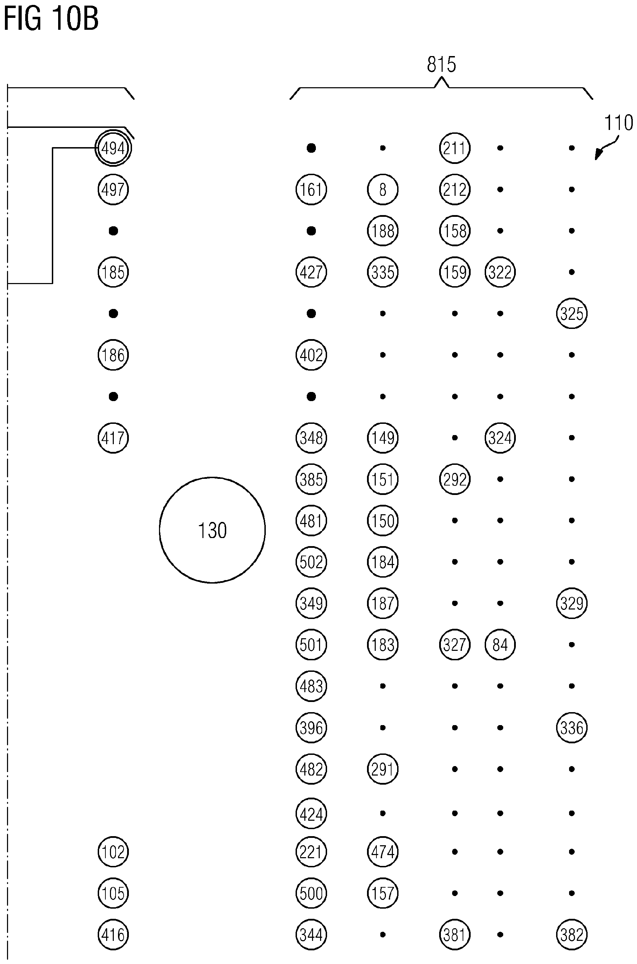

Die Nummern repräsentieren hier jeweils eine Identifikationsnummer (ID) eines an einer Position 135 gerüsteten Werkzeugs 125. Ist die Zahl in einem doppelt umrandeten Kreis dargestellt, so tritt das Werkzeug 125 in einem kritischen Werkzeugtripel r auf, andernfalls ist die Zahl einfach umrandet. Verbindungspfeile markieren die Reihenfolge der Werkzeuge 125 in einem kritischen Werkzeugtripel r. In den Figuren 9 und 10 tragen alle Werkzeuge w eine Identifikationsnummer, die im folgenden Text mit einem vorangestellten "#" gekennzeichnet ist.

Der Algorithmus bestimmt bevorzugt zunächst aus den gegeben Arbeitsschritten s die kritischen Werkzeugtripel r. Im vorliegenden Fall bestehen sieben kritische Werkzeugtripel r: (#101, #355), (#355, #101), (#147, #399), (#203, #420), (#333, #340), (#420, #400), (#494, #333). Eines der Werkzeugpaare $w_1$, $w_3$ tritt in den kritischen Tripeln r in beiden möglichen Reihenfolgen auf: (#101,#355), (#355, #101).

Die Relevanzen der kritischen Tripel werden bestimmt: rel (#101, #355) = 9, rel(#147, #399) = 6, rel(#203, #420) = 8, rel(#333, #340) = 3, rel(#355, #101) = 9, rel(#420, #400) = 8, rel(#494, #333) = 1. In dieser Notation sind für die Tripel jeweils wieder nur die zu bewegenden Werkzeuge $w_1$ und $w_3$ angegeben.

Danach wird das Werkzeugtripel r mit der höchsten Relevanz platziert, hier das Tripel (#101, #355) mit Relevanz 9. Die Relevanzen werden aktualisiert und das nächste Tripel r mit der höchsten Relevanz wird platziert. Nacheinander werden so die Tripel (#203, #420), (#147, #399), (#420, #400), (#333, #340), (#494, #333) und (#355, #101) ausgewählt und für das/die noch nicht platzierten Werkzeug(e) 125 ein Platz 135 mit minimaler Wechselzeit ermittelt.

Figur 10 zeigt eine von der Heuristik bestimmte endgültige Belegung des Werkzeugmagazins 110. Sehr gut zu erkennen ist, dass die Werkzeuge 125 aus kritischen Tripeln r wenn möglich auf Plätzen 135 nahe am Übergabepunkt 130 abgelegt sind. Die Werkzeuge #101, #399 und #494 können jedoch nur in den drei mittleren Spalten 805 für schwere Werkzeuge 125 abgelegt werden. Für diese Werkzeuge 125 werden die mit ihnen in einem kritischen Tripel zusammenhängenden Werkzeuge 125 näher an die Spalten für schwere Werkzeuge 125 platziert.

**Patentansprüche**

1. Verfahren (200) zum Zuordnen von Werkzeugen $w_i$ zu Plätzen $p_i$ in einem Werkzeugmagazin (110), wobei das Werkzeugmagazin (110) dazu eingerichtet ist, eine Anzahl Werkzeuge $w_i$ für eine Werkzeugmaschine (105) bereitzuhalten, wobei das Werkzeugmagazin (110) einen Beschicker (115) zur Beförderung von Werkzeugen $w_i$ umfasst; wobei das Verfahren (200) folgende Schritte umfasst:

- Erfassen einer Sequenz (S) von geplanten Arbeitsschritten $s_i$ der Werkzeugmaschine (105);

- wobei jedem Arbeitsschritt $s_i$ ein Werkzeug $w_i$ zugeordnet ist, mit dem die Werkzeugmaschine (105) den Arbeitsschritt $s_i$ durchführt, und eine Bearbeitungszeit $t_i$, während der das Werkzeug $w_i$ durch die Werkzeugmaschine (105) verwendet wird,

  o wobei vor dem Arbeitsschritt $s_i$ der Beschicker (115) das Werkzeug $w_i$ von seinem zugeordneten Platz $p_i$ im Werkzeugmagazin (110) zu einem Übergabepunkt (130) befördert,
  o wo es von der Werkzeugmaschine (105) aufgenommen wird,
  o wobei nach dem Arbeitsschritt $s_i$ das Werkzeug $w_i$ von der Werkzeugmaschine (105) am Übergabepunkt (130) abgelegt wird,
  o von wo es durch den Beschicker (115) zu seinem zugeordneten Platz $p_i$ im Werkzeugmagazin (110) befördert wird;

- wobei jedem Platz $p_i$ eine Zeit $b_i$ zugeordnet ist, die der Beschicker (115) für eine Beförderung eines Werkzeugs $w_i$ vom Platz $p_i$ zum Übergabepunkt (130) oder umgekehrt benötigt;

**gekennzeichnet durch** folgende Schritte:

- Bestimmen einer maximalen Zyklenzeit, die der Beschicker (115) benötigt, um ein Werkzeug $w_{i-1}$ eines erfolgten Arbeitsschritts $s_{i-1}$ vom Übergabepunkt (130) zu seinem zugeordneten Platz $p_{i-1}$ zu befördern, sich von dort zum Platz $p_{i+1}$ des Werkzeugs $w_{i+1}$ eines bevorstehenden Arbeitsschritts $s_{i+1}$ zu bewegen, und das Werkzeug $w_{i+1}$ von dort zum Übergabepunkt (130) zu befördern;
- Bestimmen einer Menge M mit allen Tripeln $r_i$ von aufeinander folgenden Arbeitsschritten $s_{i-1}$, $s_i$, $s_{i+1}$, bei denen die Bearbeitungszeit $t_i$ des Arbeitsschritts $s_i$ kürzer ist als die maximale Zyklenzeit;
- (a) Bestimmen von Relevanzen der Tripel $r_i$ der Menge M, wobei die Relevanz eines Tripels $r_i$ eine Anzahl Bewegungen oder Beförderungen umfasst, die festgelegt werden, wenn das Werkzeug $w_{i-1}$ einem Platz $p_{i-1}$ und das Werkzeug $w_{i+1}$ einem Platz $p_{i+1}$ zugeordnet werden;
- (b) Bestimmen eines Tripels der Menge M mit der höchsten Relevanz;
- (c) Zuordnen des Werkzeugs $w_1$ des bestimmten Tripels zu einem Platz $p_1$ und/oder des Werkzeugs $w_3$ zu einem Platz $p_3$ derart, dass die Bearbeitungszeit $t_2$ kleiner oder möglichst wenig größer als die Summe der Zeiten ist, die zum Befördern des Werkzeugs $w_1$ vom Übergabepunkt (130) zum Platz $p_1$, zum Bewegen des Beschickers (115) von dort zum Platz $p_3$ und zum Befördern des Werkzeugs $w_3$ von dort zum Übergabepunkt (130) erforderlich ist;
- (d) Entfernen des bestimmten Tripels aus der Menge M;
- wiederholen der Schritte (a) bis (d), bis die Menge M leer ist; und
- Zuordnen von unzugeordneten Werkzeugen $w_i$ zu unzugeordneten Plätzen $p_i$ des Werkzeugmagazins (110).

2. Verfahren (200) nach Anspruch 1, wobei die Relevanz nur bezüglich Arbeitsschritten $s_i$ bestimmt wird, die von einem Tripel $r_i$ der Menge M umfasst sind.

3. Verfahren (200) nach Anspruch 1 oder 2, wobei jedem Platz pi eine erste Zeit bi1 zugeordnet ist, die der Beschicker (115) für eine Beförderung eines Werkzeugs wi vom Platz pi zum Übergabepunkt (130) benötigt, und eine zweite Zeit bi2, die der Beschicker (115) für eine Beförderung eines Werkzeugs wi vom Übergabepunkt (130) zum Platz pi benötigt; und wobei beide Zeiten in Schritt (c) berücksichtigt werden.

4. Verfahren (200) nach einem der vorangehenden Ansprüche, wobei die Zeit bi eines Platzes pi auch bezüglich eines dem Platz pi zugeordneten Werkzeugs wi bestimmt wird.

5. Verfahren (200) nach einem der vorangehenden Ansprüche, wobei eine Zuordnung in Schritt (c) derart erfolgt, dass danach alle unzugeordneten Werkzeuge (125) einem zulässigen Platz (135) zugewiesen werden können.

6. Verfahren (200) nach Anspruch 5, wobei in Schritt (c) eine Zuordnung nur dann erfolgt, wenn ein Garant gebildet werden kann, der eine zulässige Zuordnung aller nicht zugeordneten Werkzeuge (125) zu freien Plätzen umfasst.

7. Verfahren (200) nach Anspruch 6, wobei das Bestimmen des Garants ein Vertauschen von im Garant zu Plätzen zugeordneten Werkzeugen (125) umfasst.

8. Verfahren (200) nach Anspruch 6 oder 7, wobei das Bestimmen des Garants ein Zuordnen von Werkzeugen (125) zu Plätzen (135) mittels einer Best-Fit-Strategie umfasst.

9. Verfahren (200) nach Anspruch 6 bis 8, wobei das Bestimmen des Garants ein Zuordnen von Werkzeugen (125) zu Plätzen (135) mittels eines Gemischt Ganzzahligen Programms umfasst.

10. Verfahren (200) nach Ansprüchen 6 bis 9, wobei der Garant nach Anspruch 8 bestimmt wird, falls seine Bestimmung nach Anspruch 7 scheitert; und nach Anspruch 9 bestimmt wird, falls seine Bestimmung nach Anspruch 8 scheitert.

11. Vorrichtung (140) zur Zuordnung von Werkzeugen (125) zu Plätzen (135) in einem Werkzeugmagazin (110), wobei die Vorrichtung (140) dazu eingerichtet ist, ein Verfahren (200) nach einem der vorangehenden Ansprüche auszuführen.

12. Vorrichtung (140) nach Anspruch 11, wobei die Vorrichtung dazu eingerichtet ist, eine Beförderung von Werkzeugen (125), die zum Abarbeiten der Sequenz (S) erforderlich sind, an zugeordnete Plätze (135) zu steuern.

13. System (100), umfassend eine Werkzeugmaschine (105) und eine Vorrichtung (140) nach Anspruch 11 oder 12, wobei die Vorrichtung (140) dazu eingerichtet ist, die Werkzeugmaschine (105) zum Durchführen der Arbeitsschritte der Sequenz (S) zu steuern.

## Claims

1. Method (200) for assigning tools $w_i$ to spaces $p_i$ in a tool magazine (110), wherein the tool magazine (110) is configured to hold ready a number of tools $w_i$ for a machine tool (105), wherein the tool magazine (110) comprises a feeder (115) for conveying tools $w_i$; wherein the method (200) comprises the following steps:

   - acquiring a sequence (S) of planned working steps $s_i$ of the machine tool (105);
   - wherein each working step $s_i$ is assigned a tool $w_i$, by means of which the machine tool (105) carries out the working step $s_i$, and a processing time $t_i$, during which the tool $w_i$ is used by the machine tool (105),

      o wherein, before the working step $s_i$, the feeder (115) conveys the tool $w_i$ from its assigned space $p_i$ in the tool magazine (110) to a transfer point (130),
      o where said tool is picked up by the machine tool (105),
      o wherein, after the working step $s_i$, the tool $w_i$ is set down by the machine tool (105) at the transfer point (130),
      o from where said tool is conveyed to its assigned space $p_i$ in the tool magazine (110) by the feeder (115) ;

   - wherein each space $p_i$ is assigned a time $b_i$ that the feeder (115) requires to convey a tool $w_i$ from the space $p_i$ to the transfer point (130) or vice versa;

   **characterized by** the following steps:

   - determining a maximum cycle time that the feeder (115) requires to convey a tool $w_{i-1}$ of a working step $s_{i-1}$ that has been performed from the transfer point (130) to its assigned space $p_{i-1}$, to move from there to the space $p_{i+1}$ of the tool $w_{i+1}$ of an impending working step $s_{i+1,}$ and to convey the tool $w_{i+1}$ from there to the transfer point (130);
   - determining a set M with all triplets $r_i$ of successive working steps $s_{i-1}, s_i, s_{i+1}$ in the case of which the processing time $t_i$ of the working step $s_i$ is shorter than the maximum cycle time;
   - (a) determining relevances of the triplet $r_i$ of the set M, wherein the relevance of a triplet $r_i$ comprises a number of movements or conveying actions that are defined as the tool $w_{i-1}$ is assigned to a space $p_{i-1}$ and the tool $w_{i+1}$ is assigned to a space $p_{i+1}$;
   - (b) determining a triplet of the set M with the highest relevance;
   - (c) assigning the tool $w_1$ of the determined triplet to a space $p_i$ and/or the tool $w_3$ to a space $p_3$ such that the processing time $t_2$ is shorter than, or is longer to the least possible extent than, the sum of the times required for conveying the tool $w_1$ from the transfer point (130) to the space $p_1$, for moving the feeder (115) from there to the space $p_3$ and for conveying the tool $w_3$ from there to the transfer point (130);
   - (d) removing the determined triplet from the set M;
   - repeating steps (a) to (d) until the set M is empty; and
   - assigning unassigned tools $w_i$ to unassigned spaces $p_i$ of the tool magazine (110).

2. Method (200) according to Claim 1, wherein the relevance is determined only with respect to working steps $s_i$ that

are encompassed by a triplet $r_i$ of the set M.

3. Method (200) according to Claim 1 or 2, wherein each space $p_i$ is assigned a first time $b_{i1}$, which the feeder (115) requires to convey a tool $w_i$ from the space $p_i$ to the transfer point (130), and a second time $b_{i2}$, which the feeder (115) requires to convey a tool $w_i$ from the transfer point (130) to the space $p_i$; and wherein both times are taken into consideration in step (c) .

4. Method (200) according to any one of the preceding claims, wherein the time $b_i$ of a space $p_i$ is also determined with respect to a tool $w_i$ assigned to the space $p_i$.

5. Method (200) according to any one of the preceding claims, wherein an assignment in step (c) is performed such that, thereafter, all unassigned tools (125) can be allocated to an admissible space (135).

6. Method (200) according to Claim 5, wherein, in step (c), an assignment is performed only if a guarantor can be formed that comprises an admissible assignment of all unassigned tools (125) to free spaces.

7. Method (200) according to Claim 6, wherein the determination of the guarantor comprises an interchanging of tools (125) that are assigned to spaces in the guarantor.

8. Method (200) according to Claim 6 or 7, wherein the determination of the guarantor comprises an assignment of tools (125) to spaces (135) by means of a best-fit strategy.

9. Method (200) according to Claim 6 to 8, wherein the determination of the guarantor comprises an assignment of tools (125) to spaces (135) by means of a mixed-integer program.

10. Method (200) according to Claims 6 to 9, wherein the guarantor is determined according to Claim 8 if its determination according to Claim 7 fails; and is determined according to Claim 9 if its determination according to Claim 8 fails.

11. Device (140) for assigning tools (125) to spaces (135) in a tool magazine (110), wherein the device (140) is configured to carry out a method (200) according to any one of the preceding claims.

12. Device (140) according to Claim 11, wherein the device is configured to control a conveyance of tools (125) which are required for executing the sequence (S) to assigned spaces (135) .

13. System (100) comprising a machine tool (105) and a device (140) according to Claim 11 or 12, wherein the device (140) is configured to control the machine tool (105) in order to carry out the working steps of the sequence (S).


**Revendications**

1. Procédé (200) destiné à l'affectation d'outils $w_i$ à des emplacements $p_i$ dans un magasin d'outils (110) ; dans lequel le magasin d'outils (110) est conçu pour mettre un certain nombre d'outils $w_i$ à la disposition d'une machine-outil (105) ; dans lequel le magasin d'outils (110) comprend un dispositif de chargement (115) à des fins de transport d'outils $w_i$ ; dans lequel le procédé (200) comprend les étapes suivantes dans lesquelles :

   - on enregistre une séquence (S) d'étapes de travail planifiées $s_i$ de la machine-outil (105) ;
   - dans lequel, à chaque étape de travail $s_i$, est attribué un outil $w_i$ avec lequel la machine-outil (105) met en œuvre l'étape de travail $s_i$, et un temps de traitement $t_i$ au cours duquel l'outil $w_i$ est utilisé par la machine-outil (105) ;

      o dans lequel, avant l'étape de travail $s_i$, le dispositif de chargement (115) transporte l'outil $w_i$ à partir de l'emplacement $p_i$ qui lui a été attribué dans le magasin d'outils (110) jusqu'à un point de livraison (130) ;
      o où il est récupéré par la machine-outil (105) ;
      o dans lequel, après l'étape de travail $s_i$, l'outil $w_i$ est déposé par la machine-outil (105) au point de livraison (130) ;
      o d'où il est transporté par le dispositif de chargement (115) jusqu'à l'emplacement $p_i$ qui lui a été attribué dans le magasin d'outils (110) ;

- dans lequel, à chaque emplacement $p_i$, est attribué un temps $b_i$ dont a besoin le dispositif de chargement (115) pour un transport d'un outil $w_i$ à partir de l'emplacement $p_i$ jusqu'au point de livraison (130) ou inversement ;

**caractérisé par** les étapes suivantes dans lesquelles :

- on détermine un temps de cycle maximal dont a besoin le dispositif de chargement (115) pour transporter un outil $w_{i-1}$ d'une étape de travail $s_{i-1}$ qui a été mise en œuvre, à partir du point de livraison (130) jusqu'à l'emplacement $p_{i-1}$ qui lui a été attribué, pour se déplacer à partir de cet endroit jusqu'à l'emplacement $p_{i+1}$ de l'outil $w_{i+1}$ d'une étape de travail suivante $s_{i+1}$, et pour transporter l'outil $w_{i+1}$ à partir de cet endroit jusqu'au point de livraison (130) ;
- on détermine une quantité M avec tous les triplets $r_i$ d'étapes opératoires qui se suivent l'une l'autre $s_{i-1}$, $s_i$, $s_{i+1}$, dans lesquelles le temps de traitement $t_i$ de l'étape de travail $s_i$ est plus court que le temps de cycle maximal ;
- (a) on détermine des pertinences des triplets $r_i$ de la quantité M ; dans lequel la pertinence d'un triplet $r_i$ comprend un nombre de mouvements ou de transports qui sont spécifiés lorsque l'outil $w_{i-1}$ est affecté à un emplacement $p_{i-1}$ et lorsque l'outil $w_{i+1}$ est affecté à un emplacement $P_{i+i}$ ;
- (b) on détermine un triplet de la quantité M qui présente la pertinence la plus élevée ;
- (c) on affecte, à un emplacement $p_1$, l'outil $w_1$ du triplet qui a été déterminé et/ou l'outil $w_3$ à un emplacement $p_i$ d'une manière telle que le temps de traitement $t_2$ est inférieur ou le moins supérieur possible à la somme des temps qui est requise pour le transport de l'outil $w_1$ à partir du point de livraison (130) jusqu'à l'emplacement $p_1$, pour le déplacement du dispositif de chargement (115) à partir de cet endroit jusqu'à l'emplacement $p_3$, et pour le transport de l'outil $w_3$ à partir de cet endroit jusqu'au point de livraison (130) ;
- (d) on retire de la quantité M le triplet qui a été déterminé ;
- on répète les étapes (a) à (d) jusqu'à ce que la quantité M soit vide ; et
- on affecte des outils $w_i$ qui n'ont pas fait l'objet d'une affectation à des emplacements $p_i$ du magasin d'outils (110), qui n'ont pas fait l'objet d'une affectation.

2. Procédé (200) selon la revendication 1, dans lequel la pertinence n'est déterminée que par rapport à des étapes de travail $s_i$ qui sont incluses dans un triplet $r_i$ de la quantité M.

3. Procédé (200) selon la revendication 1 ou 2, dans lequel, à chaque emplacement $p_i$ est attribué un premier temps $b_{i1}$ dont a besoin le dispositif de chargement (115) pour un transport d'un outil $w_i$ à partir de l'emplacement $p_i$ jusqu'au point de livraison (130) et un deuxième temps $b_{i2}$ dont a besoin le dispositif de chargement (115) pour un transport d'un outil $w_i$ à partir du point de livraison (130) jusqu'à l'emplacement $p_i$ ; et dans lequel les deux temps sont pris en compte dans l'étape (c).

4. Procédé (200) selon l'une quelconque des revendications précédentes, dans lequel le temps $b_i$ d'un emplacement $p_i$ est également déterminé par rapport à un outil $w_i$ qui a été affecté à l'emplacement $p_i$.

5. Procédé (200) selon l'une quelconque des revendications précédentes, dans lequel une affectation à l'étape (c) a lieu d'une manière telle que, par la suite, tous les outils (125) qui n'ont pas fait l'objet d'une affectation peuvent être affectés à un emplacement autorisé (135).

6. Procédé (200) selon la revendication 5, dans lequel, à l'étape (c), on ne procède à une affectation que lorsqu'on peut obtenir une garantie qui inclut une affectation autorisée, à des emplacements libres, de tous les outils (125) qui n'ont pas fait l'objet d'une affectation.

7. Procédé (200) selon la revendication 6, dans lequel la détermination de la garantie englobe un échange d'outils (125) qui ont été affectés à des emplacements dans la garantie.

8. Procédé (200) selon la revendication 6 ou 7, dans lequel la détermination de la garantie comprend une affectation d'outils (125) à des emplacements (135) au moyen d'une stratégie de l'ajustement optimal.

9. Procédé (200) selon les revendications 6 à 8, dans lequel la détermination de la garantie comprend une affectation d'outils (125) à des emplacements (135) au moyen d'une programmation en numération mixte.

10. Procédé (200) selon les revendications 6 à 9, dans lequel la garantie est déterminée en conformité avec la revendication 8, au cas où sa détermination en conformité avec la revendication 7 échoue ; et est déterminée en conformité avec la revendication 9, au cas où sa détermination en conformité avec la revendication 8 échoue.

**11.** Dispositif (140) destiné à l'affectation d'outils (125) à des emplacements (135) dans un magasin d'outils (110) ; dans lequel le dispositif (140) est conçu pour la mise en œuvre d'un procédé (200) selon l'une quelconque des revendications précédentes.

**12.** Dispositif (140) selon la revendication 11, dans lequel le dispositif est conçu pour la commande d'un transport d'outils (125), qui sont requis pour le traitement de la séquence (S), à des emplacements (135) qui ont été attribués.

**13.** Système (100) qui comprend une machine-outil (105) et un dispositif (140) selon la revendication 11 ou 12 ; dans lequel le dispositif (140) est conçu pour commander la machine-outil (105) à des fins de mise en œuvre des étapes de travail de la séquence (S).

## FIG 1

EP 3 914 976 B1

FIG 2

# FIG 3

S

| r1 | | t0 = 0s | (s0) |

r1 r2 w1; t1 = 20s — s1

r2 r3 w2; t2 = 5s — s2

r3 w3; t3 = 20s — s3

r4 r3 w4; t4 = 5s — s4

r4 r5 w5; t5 = 20s — s5

r5 r6 w6; t6 = 5s — s6

r6 r7 w7; t7 = 20s — s7

r7 t8 = 0s (s8)

FIG 4

FIG 5

FIG 6

FIG 7

FIG 8

# FIG 9

| FIG 9A | FIG 9B |
|--------|--------|

# FIG 9A

# FIG 9B

815

110

81

161  8  211

185  188  212

427  335  158

186  486  159  322

417  497  325

348  149  324

385  151  292

130  481  150

502  184

349  187  329

501  183  327  84

483

396  336

482  291

424

102  221  474

105  500  157

416  344  381  382

EP 3 914 976 B1

# FIG 10  FIG 10A

# FIG 10B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2018195572 A2
- EP 1870200 A1